(19)

Europäisches Patentamt

European Patent Office

Office européen des brevets

(11) **EP 4 343 555 A1**

(12) **EUROPEAN PATENT APPLICATION**
published in accordance with Art. 153(4) EPC

(43) Date of publication:
**27.03.2024  Bulletin 2024/13**

(21) Application number: **21947100.0**

(22) Date of filing: **23.06.2021**

(51) International Patent Classification (IPC):
**G06F 11/32** *(2006.01)*

(52) Cooperative Patent Classification (CPC):
**G06F 11/32**

(86) International application number:
**PCT/JP2021/023827**

(87) International publication number:
**WO 2022/269815 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nippon Telegraph And Telephone
Corporation
Chiyoda-ku
Tokyo 100-8116 (JP)**

(72) Inventors:
  • **URABE, Yuki
    Musashino-shi, Tokyo 180-8585 (JP)**
  • **TSUCHIKAWA, Kimio
    Musashino-shi, Tokyo 180-8585 (JP)**
  • **YOKOSE, Fumihiro
    Musashino-shi, Tokyo 180-8585 (JP)**
  • **YAGI, Sayaka
    Musashino-shi, Tokyo 180-8585 (JP)**

(74) Representative: **Hoffmann Eitle
Patent- und Rechtsanwälte PartmbB
Arabellastraße 30
81925 München (DE)**

(54)  **VISUALIZATION DISPLAY DEVICE, VISUALIZATION DISPLAY METHOD, AND
VISUALIZATION DISPLAY PROGRAM**

(57)  A visualization display device (10) includes: an acquisition unit (15a) configured to acquire an operation log; an alignment unit (15b) configured to generate an operation sequence in units of operations arrayed in a time series order for each case on the basis of the operation log and to align the operation sequence in units of operations; and a visualization unit (15c) configured to specify operation types that appear with a threshold or more at the same position in the operation sequence in units of operations of each case as operation types of a main flow on the basis of the aligned operation sequence in units of operations and to arrange and visualize nodes corresponding to the operation types of the main flow in a time series order on one axis.

Fig. 1

**Description**

[Technical Field]

The present invention relates to a visualization display device, a visualization display method, and a visualization display program.

[Background Art]

In order to realize effective business improvement, it is important for business analysts (hereinafter also referred to as "users") to correctly ascertain an actual business situation. In the past, as a method of accurately and efficiently ascertaining an actual business situation, there has been a method of recording content of operations performed on a terminal by a person in charge of business as an operation log and displaying the content as a flowchart in the order of operations executed for each corresponding case and by superimposing operations of the same type (see, for example, NPL 1). In addition, in order to compare differences in operations for each case, lining up and displaying the sequence of operations in the order of operations executed for each case can also be considered. Here, the term "operation" refers to an event that causes a change on a screen by clicking a graphical user interface (GUI) component or inputting a value.

For example, in a case where a business analyst attempts to find a location to which robotic process automation (hereinafter referred to as "RPA") can be applied from a flowchart, it is said that it is effective for the business analyst to first find a location where RPA can be applied effectively, for example, a common and repeated operation procedure (hereinafter referred to as a "main flow") among operations for each case. Therefore, collecting operations performed for business execution as logs and visualizing an operation procedure in the form of a flowchart in which operations of the same type are treated as one node and the operations are connected by edges is said to be an effective visualization method for finding the main flow.

[Citation List]

[Non Patent Literature]

[NPL 1] Urabe, Yagi, Tsuchikawa, Masuda: "Study of business process visualization method using operation log as input," IEICE Technical Report, vol. 118, No. 483, ICM2018-64, pp. 83-88, 2019.

[Summary of Invention]

[Technical Problem]

However, in the related art described above, it is not possible to easily specify the main flow in business analysis. This is because there are a wide variety of operation procedures performed by a person in charge of business, and thus in a case where all the operation procedures are visualized without distinction, it is difficult to specify which operation procedure is the main flow without knowledge of target business or knowledge of how to view and analyze a flowchart.

[Solution to Problem]

In order to solve the above problem and achieve the object, according to the present invention, there is provided a visualization display device including: an acquisition unit configured to acquire an operation log; an alignment unit configured to generate an operation sequence in units of operations arrayed in a time series order for each case on the basis of the operation log and to align the operation sequence in units of operations; and a visualization unit configured to specify operation types that appear with a threshold or more at the same position in the operation sequence in units of operations of each case as operation types of a main flow on the basis of the aligned operation sequence in units of operations and to arrange and visualize nodes corresponding to the operation types of the main flow in a time series order on one axis.

In addition, according to the present invention, there is provided a visualization display method which is executed by a visualization display device, the method including: an acquisition step of acquiring an operation log; an alignment step of generating an operation sequence in units of operations arrayed in a time series order for each case on the basis of the operation log and aligning the operation sequence in units of operations; and a visualization step of specifying operation types that appear with a threshold or more at the same position in the operation sequence in units of operations of each case as operation types of a main flow on the basis of the aligned operation sequence in units of operations and arranging and visualizing nodes corresponding to the operation types of the main flow in a time series order on one axis.

In addition, according to the present invention, there is provided a visualization display program causing a computer to execute: an acquisition step of acquiring an operation log; an alignment step of generating an operation sequence in units of operations arrayed in a time series order for each case on the basis of the operation log and aligning the operation sequence in units of operations; and a visualization step of specifying operation types that appear with a threshold or more at the same position in the operation sequence in units of operations of each case as operation types of a main flow on the basis of the aligned operation sequence in units of operations and arranging and visualizing nodes corresponding to the operation types of the main flow in a time series order on one axis.

[Advantageous Effects of Invention]

In the present invention, it is possible to easily specify a main flow in business analysis.

[Brief Description of Drawings]

[Fig. 1] Fig. 1 is a block diagram illustrating a configuration example of a visualization display device according to an embodiment.
[Fig. 2] Fig. 2 is a diagram illustrating an example of an operation log stored in a storage unit according to the embodiment.
[Fig. 3] Fig. 3 is a diagram illustrating an example of alignment processing according to the embodiment.
[Fig. 4] Fig. 4 is a diagram illustrating an example of alignment processing according to the embodiment.
[Fig. 5] Fig. 5 is a diagram illustrating an example of alignment processing according to the embodiment.
[Fig. 6] Fig. 6 is a diagram illustrating an example of alignment processing according to the embodiment.
[Fig. 7] Fig. 7 is a diagram illustrating an example of alignment processing according to the embodiment.
[Fig. 8] Fig. 8 is a diagram illustrating an example of alignment processing according to the embodiment.
[Fig. 9] Fig. 9 is a diagram illustrating an example of alignment processing according to the embodiment.
[Fig. 10] Fig. 10 is a diagram illustrating an example of alignment processing according to the embodiment.
[Fig. 11] Fig. 11 is a diagram illustrating an example of visualization processing related to the embodiment.
[Fig. 12] Fig. 12 is a diagram illustrating an example of visualization processing related to the embodiment.
[Fig. 13] Fig. 13 is a diagram illustrating an example of visualization processing related to the embodiment.
[Fig. 14] Fig. 14 is a flowchart illustrating an example of the overall flow of visualization display processing according to the embodiment.
[Fig. 15] Fig. 15 is a flowchart illustrating an example of a flow of operation log acquisition processing according to the embodiment.
[Fig. 16] Fig. 16 is a flowchart illustrating an example of a flow of alignment processing according to the embodiment.
[Fig. 17] Fig. 17 is a flowchart illustrating an example of a flow of visualization processing related to the embodiment.
[Fig. 18] Fig. 18 is a diagram illustrating an example of an operation log stored in a storage unit according to a modification example of the embodiment.
[Fig. 19] Fig. 19 is a diagram illustrating an example of alignment processing according to the modification example of the embodiment.
[Fig. 20] Fig. 20 is a diagram illustrating an example of alignment processing according to the modification example of the embodiment.
[Fig. 21] Fig. 21 is a diagram illustrating an example of alignment processing according to the modification example of the embodiment.
[Fig. 22] Fig. 22 is a diagram illustrating an example of alignment processing according to the modification example of the embodiment.
[Fig. 23] Fig. 23 is a diagram illustrating an example of alignment processing according to the modification example of the embodiment.
[Fig. 24] Fig. 24 is a diagram illustrating an example of alignment processing according to the modification example of the embodiment.
[Fig. 25] Fig. 25 is a diagram illustrating an example of alignment processing according to the modification example of the embodiment.
[Fig. 26] Fig. 26 is a diagram illustrating an example of alignment processing according to the modification example of the embodiment.
[Fig. 27] Fig. 27 is a diagram illustrating an example of alignment processing according to the modification example of the embodiment.

[Fig. 28] Fig. 28 is a diagram illustrating an example of alignment processing according to the modification example of the embodiment.

[Fig. 29] Fig. 29 is a diagram illustrating an example of alignment processing according to the modification example of the embodiment.

[Fig. 30] Fig. 30 is a diagram illustrating an example of alignment processing according to the modification example of the embodiment.

[Fig. 31] Fig. 31 is a diagram illustrating an example of alignment processing according to the modification example of the embodiment.

[Fig. 32] Fig. 32 is a diagram illustrating an example of alignment processing according to the modification example of the embodiment.

[Fig. 33] Fig. 33 is a diagram illustrating an example of visualization processing related to the modification example of the embodiment.

[Fig. 34] Fig. 34 is a diagram illustrating an example of visualization processing related to the modification example of the embodiment.

[Fig. 35] Fig. 35 is a flowchart illustrating an example of a flow of alignment processing according to the modification example of the embodiment.

[Fig. 36] Fig. 36 is a flowchart illustrating an example of a flow of visualization processing related to the modification example of the embodiment.

[Fig. 37] Fig. 37 is a diagram illustrating a computer that executes a program.

[Fig. 38] Fig. 38 is a diagram illustrating conventional visualization display processing.

[Fig. 39] Fig. 39 is a diagram illustrating conventional visualization display processing.

[Description of Embodiments]

Hereinafter, an embodiment of a visualization display device, a visualization display method, and a visualization display program according to the present invention will be described in detail with reference to the accompanying drawings. Meanwhile, the present invention is not limited by an embodiment to be described below.

[Embodiment]

Hereinafter, processing of a visualization display system according to an embodiment (appropriately, the present embodiment), the configuration of a visualization display device 10, the details of the processing, and a flow of the processing will be described in order, and finally the effects of the present embodiment will be described.

[Processing of visualization display system]

Processing of a visualization display system (appropriately, the present system) according to the present embodiment will be described below. Processing of the present system will be described below in comparison with the related art.

(1. Conventional visualization display processing)

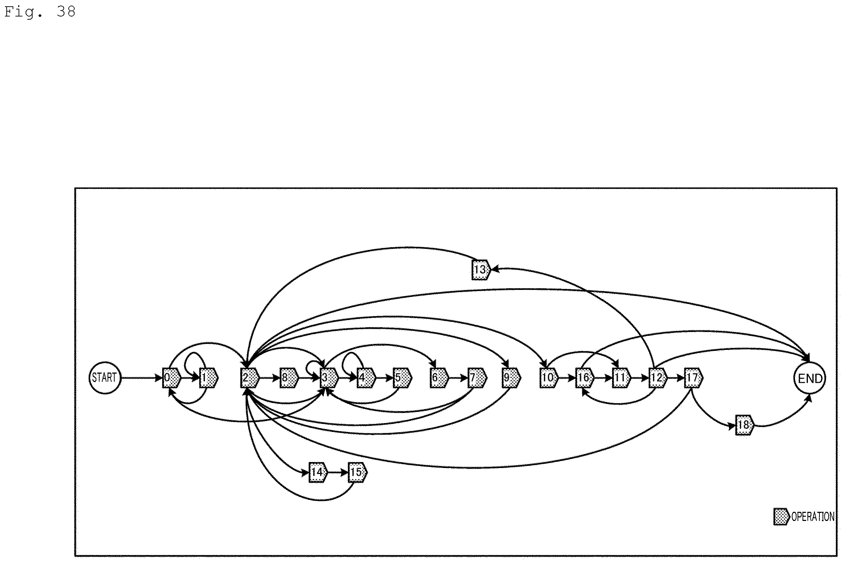

As described above, it is effective for a business analyst to find a main flow which is expected to have a high operation frequency and a high improvement effect among operations for each case as a location where the application of RPA is effective. Therefore, it is called a visualization method effective for finding a main flow to collect operations performed for business execution as a log and to visualize the operation procedure in the form of a flowchart with operations of the same type as one node and the operations connected by edges as shown in Fig. 38. However, there are a wide variety of operation procedures, and thus in a case where all the operations procedures are visualized without distinction, it is difficult to specify which operation procedure is a main flow without knowledge of a target business and knowledge of how to view and analyze flowcharts (problem a).

Further, in a case where a flowchart is configured with operations of the same type as shown in Fig. 38 superimposed and expressed as one node and operations of the same type occur multiple times in a case, it is difficult to strictly ascertain the order of operations using the method shown in Fig. 38 (problem b). For example, in Fig. 38, the operation "0" is followed by the operation "1." There are an operation to return from "1" to the same "1" and an operation to transition to "0." The flow of the operations can be considered to be "0, 1, 0," "0, 1, 1, 0," and "0, 1, 1, 1, ⋯ (1 is repeated), 0," and the order of the operations cannot be accurately ascertained. If the main flow and the other operation procedures that appear variously can be separately found from the operation log, a business analyst can quickly examine a method of applying RPA to the automatically specified main flow, a method of leveling and simplifying locations where operations are diversified, or the like without specifying the main flow by himself/herself.

In addition, as a method of extracting a main flow from the operation log, there is a method of finding a main flow from the operation log by preparing operation sequences (operation sequences lined up in the order in which operations are executed) for each case from the operation log acquired from a terminal in a business which is performed repeatedly, specifying the type of operation sequence and the number of occurrences, and setting an operation sequence equal to or more than a threshold as a main flow (flow of operations occurring frequently) on the basis of a threshold set by a user and those that are not as exceptional flows (flows of exceptional operations).

In the above method, it is assumed that, for example, there are 100 operation sequences which are divided into seven types. When the user sets the threshold to 2, it is a method of determining two types having the highest number of occurrences among the seven types of operation sequences as the main flow and the remaining five types as exceptional flows. However, since there are various types of operations in the logs acquired in units of operations, it is unlikely that there is a completely coincident operation sequence even if an operation sequence is created for each case from the operation log and a main flow is extracted using the above method. Therefore, in the above method, it is difficult to classify the operation sequences in the first place, and the main flow cannot be extracted (problem c).

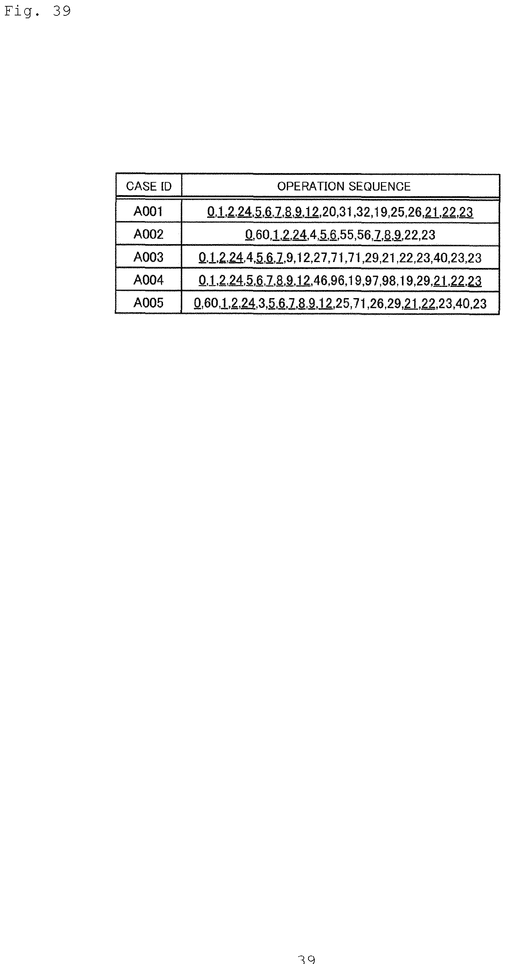

In addition, there is also a method of observing the operation sequence of a plurality of cases in the order of appearance of operations, and extracting the operations that appear in cases of a threshold or more in order and in consideration of the immediately preceding operation type (see Fig. 39). Fig. 39 shows the operation sequence for each case, and the numerals described for case ID represent the operation type (operation ID). Meanwhile, in Fig. 39, in a case where there is a common operation ID in the operation sequence of another case, the numeral which is the ID is underlined.

For example, in Fig. 39, there are five cases of operation sequences, and the threshold is set to 3. Among a plurality of cases, the first operation that appears most frequently is "0," and the second operation that appears most frequently next to "0" is "1." However, in this method, the main flow cannot be extracted in consideration of a case in which the operation extracted as the main flow is missing (problem d). That is, since "21" and "8" are missing in "A002" and "A003," respectively, for the case ID shown in Fig. 39, the main flow cannot be extracted from the subsequent operation sequence.

(2. Visualization display processing according to the present embodiment)

In visualization display processing according to the present embodiment, the operation sequence (operations in the order of operation time) for each case related to the same work is used as an input, and the operation logs are aligned so that operations of the same type are arranged in the same sequence insofar as possible on the basis of a method of multiple sequence alignment. Finally, for all the cases, operations that appear with a threshold or more are extracted as the main flow, and operations less than the threshold are extracted as operations other than the main flow, so that these operations are visualized distinctly. That is, in the visualization display processing according to the present embodiment, in business which is performed repeatedly for each case, operation procedures performed for each case are roughly the same as each other, but in a case where a wide variety of operations occur in the middle, the same operation occurs multiple times in one case, or operations are missing in comparison with other cases, the main flow can be extracted from a set of operations for each of the plurality of cases in the same business on the basis of the method of multiple sequence alignment, and the main flow and the other operation procedures can be ascertained distinctly.

Therefore, in the visualization display processing according to the present embodiment, the main flow can be extracted in consideration of all the cases even if there are a variety of types and orders of operations that have occurred in the cases. In addition, in the visualization display processing according to the present embodiment, even if operations of the same type are included multiple times in the case, a process in which the order thereof is expressed can be drawn. Further, in the visualization display processing according to the present embodiment, attention can be paid only to the main flow by performing highlighting and visualization or by setting a threshold and visualizing only data that appears with a threshold or more. From the above, the visualization display processing according to the present embodiment contributes to solving the above problems a to d.

[Configuration of visualization display device 10]

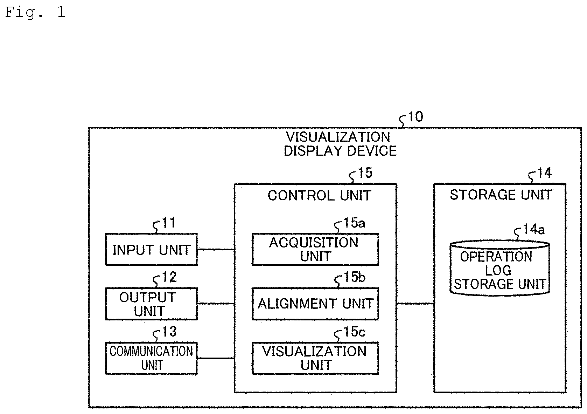

The configuration of the visualization display device 10 according to the embodiment will be described in detail with reference to Fig. 1. Fig. 1 is a block diagram illustrating a configuration example of a visualization display device according to the embodiment. The visualization display device 10 includes an input unit 11, an output unit 12, a communication unit 13, a storage unit 14, and a control unit 15.

(1. Input unit 11)

The input unit 11 takes charge of input of various types of information to the visualization display device 10. For example, the input unit 11 is realized by a mouse, a keyboard, or the like, and receives input of setting information or the like to the visualization display device 10.

(2. Output unit 12)

The output unit 12 takes charge of output of various types of information from the visualization display device 10. For example, the output unit 12 is realized by a display or the like, and outputs setting information or the like stored in the visualization display device 10. In addition, the output unit 12 displays the visualization result output by a visualization unit 15c of the control unit 15 to be described later.

(3. Communication unit 13)

The communication unit 13 takes charge of data communication with another device. For example, the communication unit 13 performs data communication with each communication device. In addition, the communication unit 13 can perform data communication with an operator's terminal (not shown).

(4. Storage unit 14)

The storage unit 14 stores various types of information referred to when the control unit 15 operates and various types of information acquired when the control unit 15 operates. The storage unit 14 has an operation log storage unit 14a. Here, the storage unit 14 can be realized, for example, by a semiconductor memory element such as a random access memory (RAM) or a flash memory, a storage device such as a hard disk or an optical disc, or the like. Meanwhile, in the example of Fig. 1, the storage unit 14 is installed inside the visualization display device 10, but it may be installed outside the visualization display device 10, and a plurality of storage units may be installed.

(4-1. Operation log storage unit 14a)

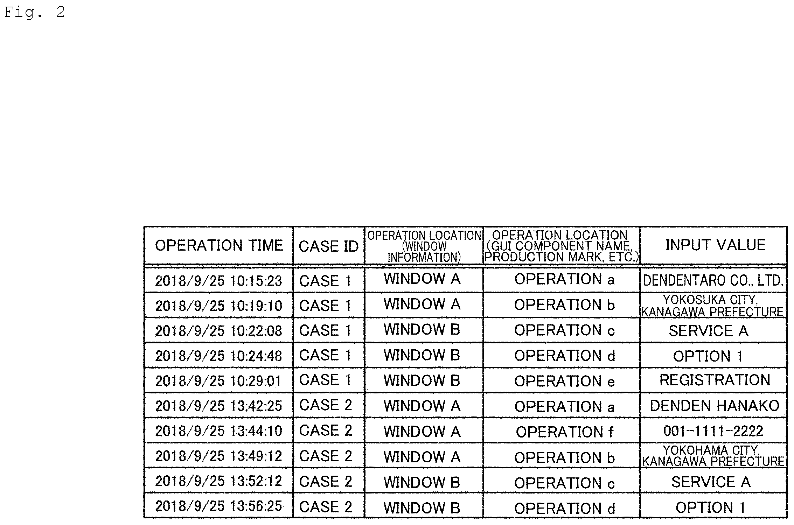

An example of an operation log stored in the operation log storage unit 14a will be described with reference to Fig. 2. Fig. 2 is a diagram illustrating an example of an operation log stored in a storage unit according to the embodiment. The operation log storage unit 14a stores an operation log. For example, the operation log storage unit 14a stores "operation time," "case ID," "operation location (window information)," "operation location (GUI component, coordinates, etc.)," and "input value" as an operation log.

(5. Control unit 15)

The control unit 15 takes charge of control of the visualization display device 10 as a whole. The control unit 15 includes an acquisition unit 15a, an alignment unit 15b, and the visualization unit 15c. Here, the control unit 15 is, for example, an electronic circuit such as a central processing unit (CPU) or a micro processing unit (MPU), or an integrated circuit such as an application specific integrated circuit (ASIC) or a field programmable gate array (FPGA).

(5-1. Acquisition unit 15a)

The acquisition unit 15a acquires an operation log. For example, the acquisition unit 15a acquires an operation log including information on the operation location. Here, the information on the operation location is window information related to a user's operation, a GUI component name, coordinates, etc., but there is no particular limitation thereto. In addition, the acquisition unit 15a acquires an operation time, a case ID, and an input value. On the other hand, the acquisition unit 15a stores the acquired operation log in the operation log storage unit 14a of the storage unit 14. Meanwhile, the acquisition unit 15a may output the acquired operation log to the alignment unit 15b.

(5-2. Alignment unit 15b)

The alignment unit 15b generates an operation sequence in units of operations arrayed in a time series order for each case on the basis of the operation log, and aligns the operation sequence in units of operations. For example, the alignment unit 15b specifies operations of the same type by extracting the information on the operation location from the operation log, aligns the operation sequence in units of operations through pairwise alignment, generates a distance matrix for each operation sequence in units of operations, generates a distance vector using the distance matrix, and further aligns the operation sequence through multiple sequence alignment in the order of the operation sequence in units of operations having the smaller distance vector.

That is, as alignment processing, the alignment unit 15b (1) creates a distance matrix using the difference caused by pairwise alignment of case pairs, and (2) generates a distance vector for each case from the distance matrix, to thereby perform multiple sequence alignment in order from the case where the distance between vectors is short. Here, the pairwise alignment involves aligning two sequences, and the multiple sequence alignment involves aligning three or more sequences, but the alignment processing to be executed is not particularly limited.

In addition, the alignment unit 15b outputs the alignment result to the visualization unit 15c. Meanwhile, the alignment unit 15b may store the alignment result in the storage unit 14.

(5-3. Visualization unit 15c)

The visualization unit 15c specifies operation types that appear with a threshold or more at the same position in the operation sequence in units of operations for each case, as the operation type of the main flow, on the basis of the aligned operation sequence in units of operations, and arranges and visualizes nodes corresponding to the operation type of the main flow in a time series order on one axis. In addition, the visualization unit 15c arranges and visualizes nodes corresponding to operation types other than the operation type of the main flow in a time series order at positions different from on one axis where the nodes corresponding to the operation type of the main flow are arranged.

Further, the visualization unit 15c sets a reference value (threshold' of operation) of an operation to be visualized, arranges nodes corresponding to the operation type of the main flow in a time series order on one axis, among the nodes corresponding to the operation types that appear with the reference value or higher of the operation, and arranges and visualizes the nodes corresponding to the operation types other than the operation type of the main flow in a time series order at positions different from on one axis.

In addition, the visualization unit 15c outputs the visualization result to the output unit 12. Meanwhile, the visualization unit 15c may store the visualization result in the storage unit 14.

[Details of processing]

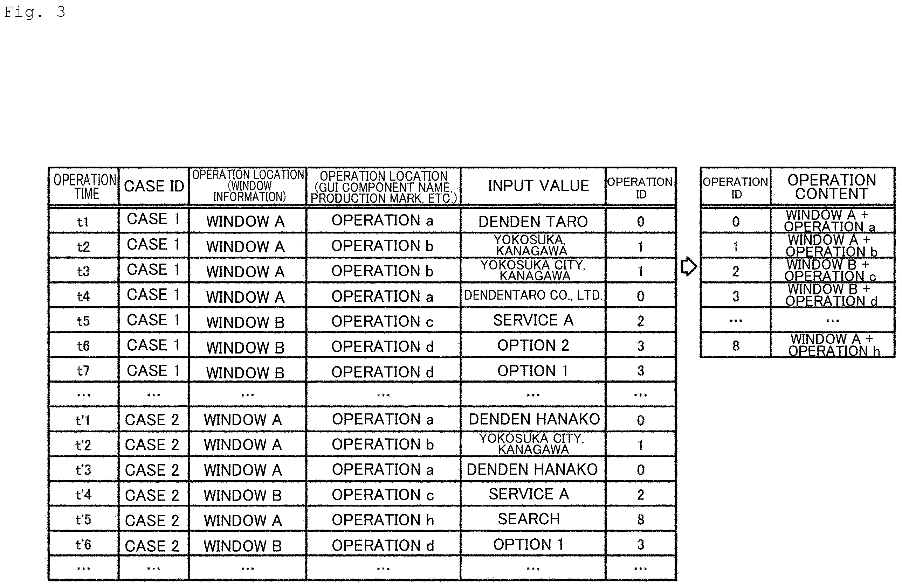

The details of processing according to the present embodiment will be described with reference to Figs. 3 to 13, formulas, and the like. Alignment processing and visualization processing will be described below in detail.

(1. Alignment processing)

Alignment processing will be described with reference to Figs. 3 to 10, formulas, and the like. Fig. 3 to Fig. 10 are diagrams illustrating an example of alignment processing according to the embodiment. Hereinafter, ID creation processing, operation sequence generation processing, operation sequence classification processing, sequence alignment processing, and position ID assignment processing will be described in this order.

(1-1. ID creation processing)

The ID creation processing will be described with reference to Fig. 3. The alignment unit 15b of the visualization display device 10 creates an operation ID from operation log data. At this time, the alignment unit 15b assigns the operation ID on the basis of (1) data matching GUI components, (2) data matching information on a combination of an active window and the GUI components, and (3) information such as designation performed by a user (for example, designation that an operation a and an operation b are set to have the same operation ID). In Fig. 3, the alignment unit 15b assigns, for example, the operation ID "0" to the combination of operation content "window A" + "operation a" on the basis of the above information of (2).

(1-2. Operation sequence generation processing)

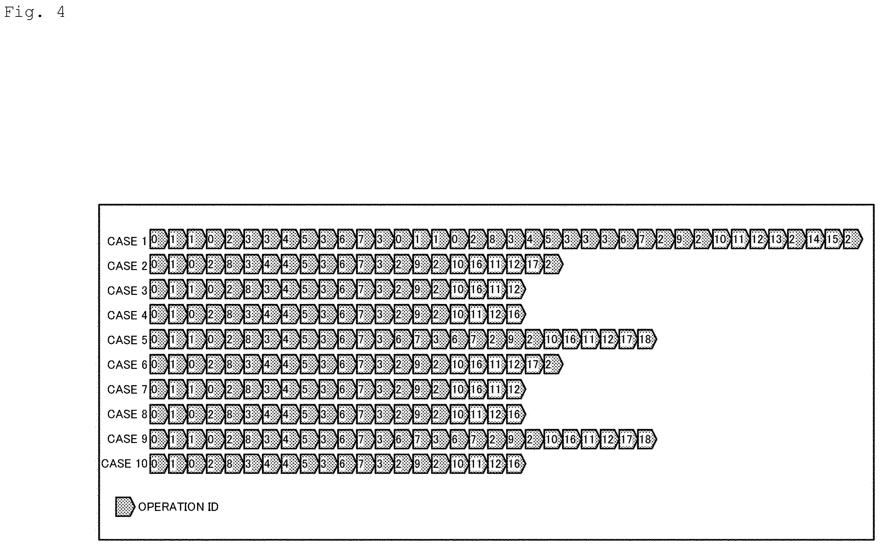

The operation sequence generation processing will be described with reference to Fig. 4. The alignment unit 15b generates an operation sequence based on the operation ID in the order of operation time for each case ID of the operation log acquired from the operation log storage unit 14a. In Fig. 4, the alignment unit 15b generates, for example, "0, 1, 1, 0, 2, 3, 3, ···" as an operation sequence based on the operation ID of the case ID "case 1," "0, 1, 0, 2, 8, 3, 4, ···" as an operation sequence based on the operation ID of the case ID "case 2," and the like. In addition, in Fig. 4, the alignment unit 15b generates an operation sequence based on the operation IDs in the order of operation time for ten cases with case IDs "case 1" to "case 10."

(1-3. Operation sequence classification processing)

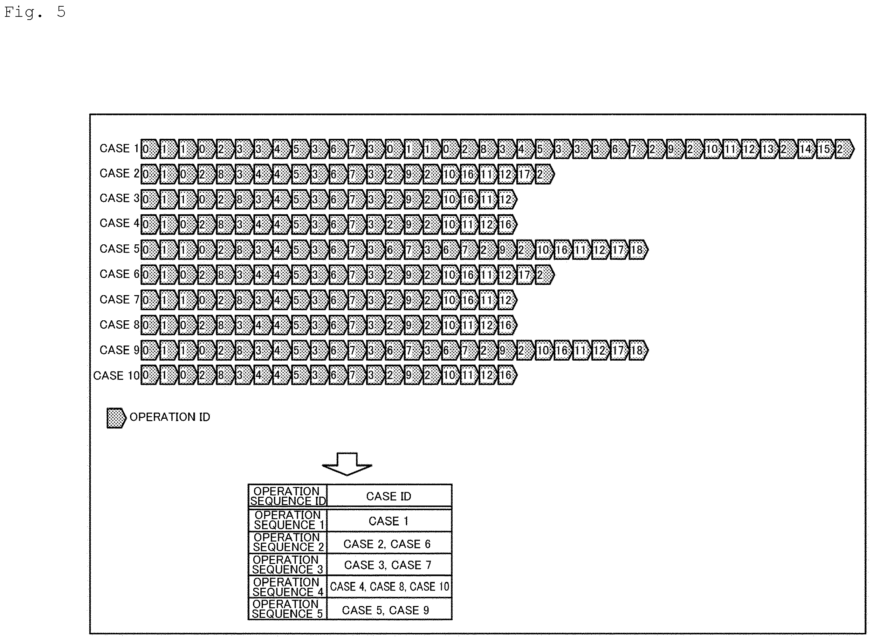

The operation sequence classification processing will be described with reference to Fig. 5. The alignment unit 15b compares the types and orders of operations in the operation sequences and classifies them into types of operation sequences. At this time, the alignment unit 15b determines whether the operation sequence completely matches as a method of determining an operation type. In Fig. 5, for example, since "0, 1, 0, 2, 8, 3, 4, 4, 5, 3, 6, 7, 3, 2, 9, 2, 10, 16, 11, 12, 17, 2" completely matches as the operation sequences based on the operation IDs of the case IDs "case 2" and "case 6," the alignment unit 15b classifies "case 2" and "case 6" into the operation sequence ID "operation sequence 2." In addition, in Fig. 5, the alignment unit 15b similarly classifies only "case 1" into "operation sequence 1," "case 3" and "case 7" into "operation sequence 3," "case 4," "case 8," and "case 10" into "operation sequence 4," and "case 5" and "case 9" into "operation sequence 5."

(1-4. Sequence alignment processing)

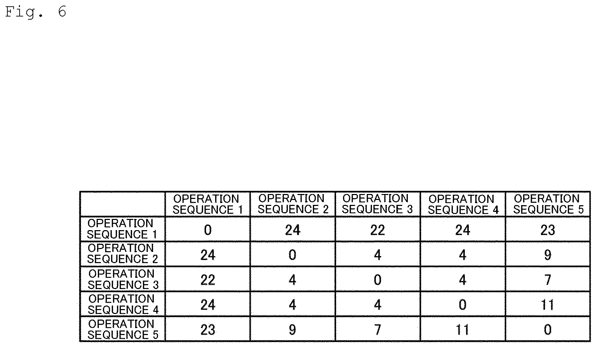

The sequence alignment processing will be described with reference to Figs. 6 to 9. Hereinafter, the outline of the sequence alignment processing will be described, and then the details of the sequence alignment processing will be described.

(1-4-1. Outline)

The alignment unit 15b uses an operation sequence for each operation sequence type and performs sequence alignment of operation sequences using a progressive alignment method which is one of multiple sequence alignment methods. Specifically, first, the alignment unit 15b applies a sequence alignment method (pairwise alignment) to two operation sequences, extracts a difference score between these operation sequences, and stores it in a distance matrix (procedure 1). Second, the alignment unit 15b calculates the distance matrix of the operation sequences as shown in Fig. 6 by applying the above procedure 1 to all the operations sequences, extracts the distance vector for each operation sequence from the distance matrix, obtains a distance between the operation sequences from the distance vector, and creates a tree diagram assembled from the operation sequences with a short distance therebetween (procedure 2). Third, the alignment unit 15b further performs sequence alignment (multiple sequence alignment) of the operation sequences with a short distance therebetween (procedure 3) .

(1-4-2. Details)

(1-4-2-1. Procedure 1)

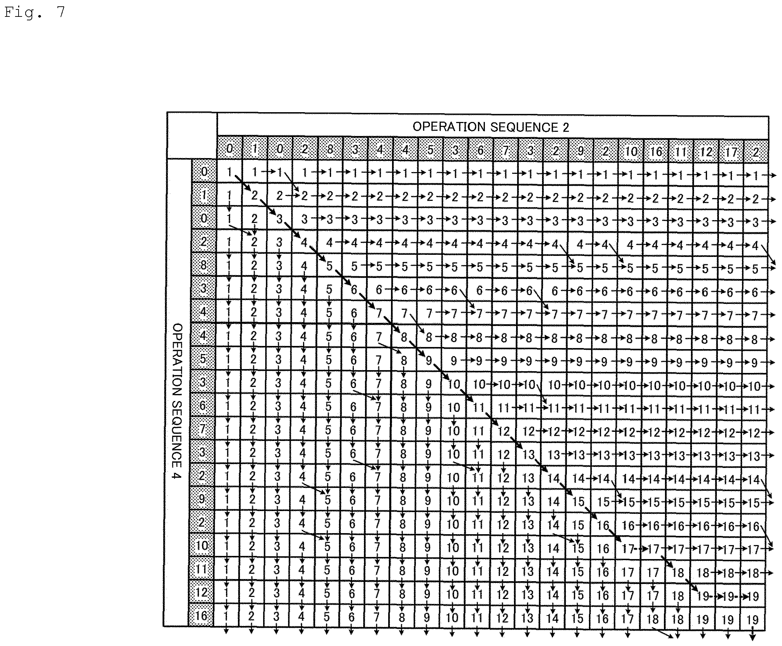

The details of procedure 1 of the sequence alignment processing will be described with reference to Fig. 7. After setting a specific score calculation recurrence formula, the alignment unit 15b defines a problem of finding a path for maximizing the score among the paths from the upper left cell to the lower right cell, and solves it using a dynamic programming method. However, the alignment unit 15b may use algorithms other than the dynamic programming method.
For example, the alignment unit 15b performs procedure 1 using a score calculation recurrence formula shown in the following Formula (1).
[Formula 1]

$$F(i,j) = max \begin{cases} F(i-1, j-1) + s(x_i, y_j) \cdots \ulcorner \searrow \lrcorner \\ F(i-1, j) - d \cdots \ulcorner \rightarrow \lrcorner \\ F(i, j-1) - d \cdots \ulcorner \downarrow \lrcorner \end{cases} \cdots (1)$$

In Formula (1), (i, j) represents the coordinates of (column, row) in the table of Fig. 7. In addition, F(i, j) is a score on the path at coordinates (i, j). In addition, in Formula (1), the score penalty is set to d = 0, and $s(x_i, y_j)$ is set to +1 when the operation IDs match at a certain position and set to -1 when they do not match.
In Fig. 7, the alignment unit 15b calculates a difference score (distance matrix) from "operation sequence 2" and "operation sequence 4." For example, in a case where the score on the path of F(1, 1) is calculated, the relation of s(1, 1) = 1 is established because the operation ID of "operation sequence 2" (i = 1) is "0," the operation ID of "operation sequence 4" (j = 1) is "0," and the operation IDs match. Therefore, as shown in the following Formula (2), F(1, 1) = 1 is calculated by obtaining the maximum value as a solution.

[Formula 2]

$$F(1,1) = max \begin{cases} F(0,0) + s(1,1) = 1 \\ F(0,1) - d = 0 \quad = 1 \quad \cdots (2) \\ F(1,0) - d = 0 \end{cases}$$

Similarly, in a case where the score on the path of F(2, 2) is calculated, the relation of s(2, 2) = 1 is established because the operation ID of "operation sequence 2" (i = 2) is "1," the operation ID of "operation sequence 4"(j = 2) is "1," and the operations match. Therefore, as shown in the following Formula (3), F(2, 2) = 2 is calculated by obtaining the maximum value as a solution.
[Formula 3]

$$F(2,2) = max \begin{cases} F(1,1) + s(2,2) = 1 + 1 = 2 \\ F(1,2) - d = 1 \quad\quad = 2 \quad \cdots (3) \\ F(2,1) - d = 1 \end{cases}$$

The alignment unit 15b executes the sequence alignment of "operation sequence 2" and "operation sequence 4" by calculating the scores on the above paths for all the cells and performing a process of finding a path for maximizing the score among the paths from the upper left cell to the lower right cell in Fig. 7. At this time, in a case where there is "-" or "↓" in the operation sequence, the alignment unit 15b lines up operation ID sequences with a blank "-" in that portion. That is, "operation sequence 2" is aligned as "0, 1, 0, 2, 8, 3, 4, 4, 5, 3, 6, 7, 3, 2, 9, 2, 10, 16, 11, 12, 17, 2, -," and "operation sequence 4" is aligned as "0, 1, 0, 2, 8, 3, 4, 4, 5, 3, 6, 7, 3, 2, 9, 2, 10, -, 11, 12, -, -, 16."
The alignment unit 15b compares the aligned operation ID sequences, calculates the number of operation IDs that do not match at the compared positions as a difference score, and stores it in the distance matrix. That is, when the aligned operation ID sequences of "operation sequence 2" and "operation sequence 4" are compared with each other, the alignment unit 15b calculates the difference score as "4" and stores it in the distance matrix because four operation IDs are different in the corresponding sequences.

(1-4-2-2. Procedure 2)

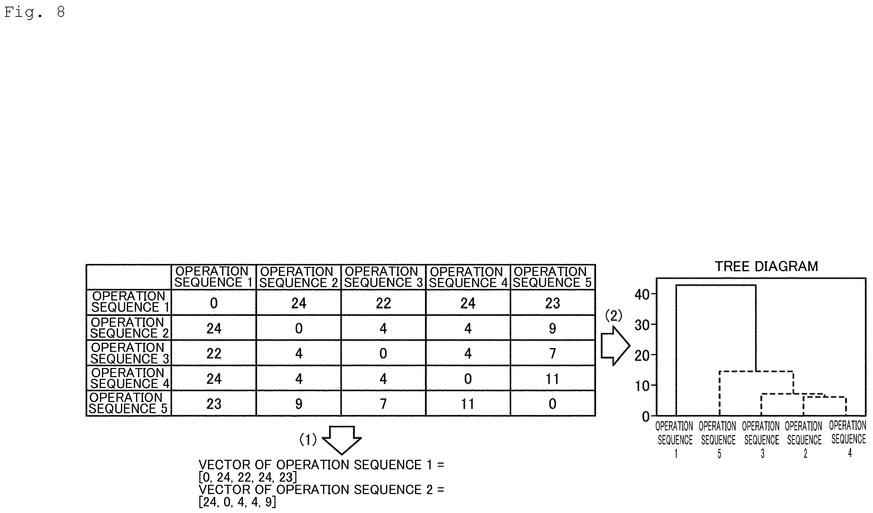

The details of procedure 2 of the sequence alignment processing will be described with reference to Fig. 8. First, the alignment unit 15b calculates the distance matrix of the operation sequences as shown in Fig. 6 by applying the above procedure 1 to all the operations sequence, and calculates the distance vector for each operation sequence using the calculated distance matrix (see Fig. 8(1)).
In Fig. 8(1), the alignment unit 15b calculates, for example, the distance vector of "operation sequence 1" as [0, 24, 22, 24, 23], and calculates the distance vector of "operation sequence 2" as [24, 0, 4, 4, 9].
Next, the alignment unit 15b creates a tree diagram on the basis of a hierarchical clustering method using the distance vector for each operation sequence (see Fig. 8(2)). At this time, the alignment unit 15b performs calculation of the distance between operation sequences using a vector distance calculation method such as cosine similarity, but there is no particular limitation thereto.
In Fig. 8(2), the alignment unit 15b uses the distance vectors of "operation sequence 1" to "operation sequence 5" to visualize the distance between operation sequences (cases) using a tree diagram, and specifies "operation sequence 4," "operation sequence 2," "operation sequence 3," "operation sequence 5," and "operation sequence 1" as having a shorter distance in this order. Meanwhile, the purpose of the present processing is not to create a tree diagram, but to specify the cases in the order of shortest distance.

(1-4-2-3. Procedure 3)

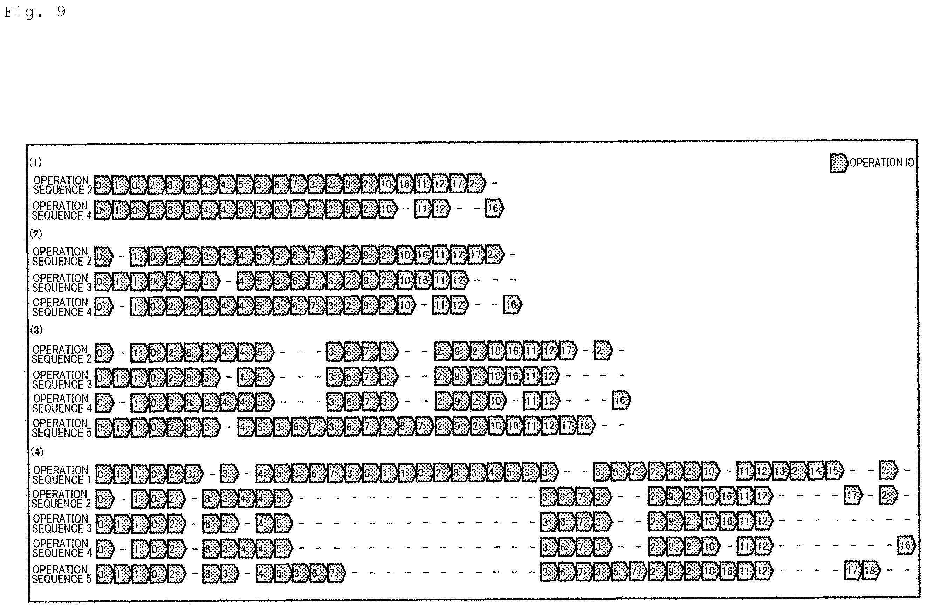

The details of procedure 3 of the sequence alignment processing will be described with reference to Fig. 9. The alignment unit 15b aligns the operation sequences obtained through the above procedure 2 in the order of shortest distance (smallest value). At this time, the alignment unit 15b aligns the operation sequences in the same way as the sequence alignment method in the above procedure 1. That is, in the same way as the above procedure 1, after setting a specific score calculation recurrence formula, the alignment unit 15b defines a problem of finding a path for maximizing the score among the paths from the upper left cell to the lower right cell, and solves it using a dynamic programming method, and in a case where there is "-" or "↓" in the operation sequence, lines up the operation sequence with a blank "-" in that portion.

In Fig. 9, first, the alignment unit 15b aligns "operation sequence 2" and "operation sequence 4" (see Fig. 9(1)). Second, the alignment unit 15b aligns "operation sequence 3" with "operation sequence 2" and "operation sequence 4" after alignment (see Fig. 9(2)). Third, the alignment unit 15b aligns "operation sequence 5" with "operation sequence 2," "operation sequence 3," and "operation sequence 4" after alignment (see Fig. 9(3)). Fourth, the alignment unit 15b aligns "operation sequence 1" with "operation sequence 2," "operation sequence 3," "operation sequence 4," and "operation sequence 5" after alignment (see Fig. 9(4)).

(1-5. Position ID assignment processing)

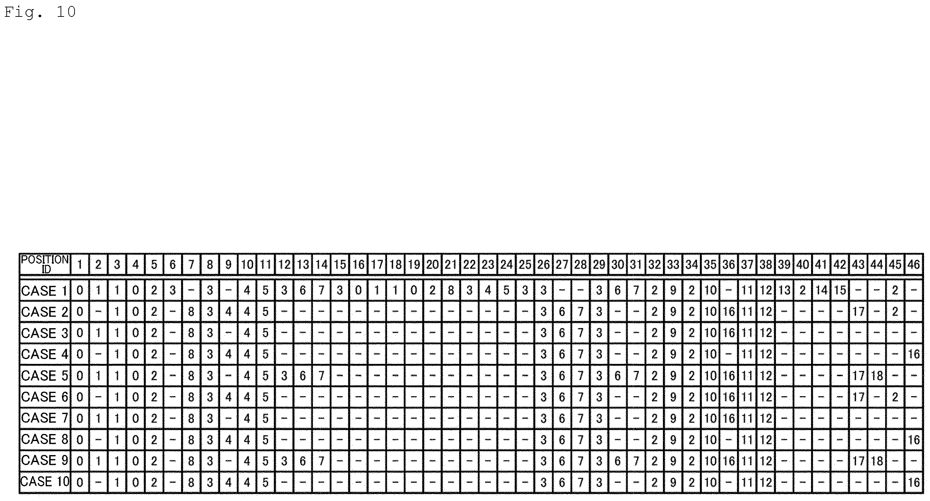

The position ID assignment processing will be described with reference to Fig. 10. First, the alignment unit 15b reflects the result after the alignment of the operation sequence IDs in the case ID. In Fig. 10, the alignment unit 15b reflects, for example, the operation sequence of "case 1" as the result after the alignment of "operation sequence 1," and reflects the operation sequences of "case 2" and "case 6" as the result after the alignment of "operation sequence 2." Next, the alignment unit 15b assigns a position ID to each sequence of the result after alignment. In Fig. 10, the alignment unit 15b assigns "1" to "46" as a position ID common to "case 1" to "case 10."

(2. Visualization processing)

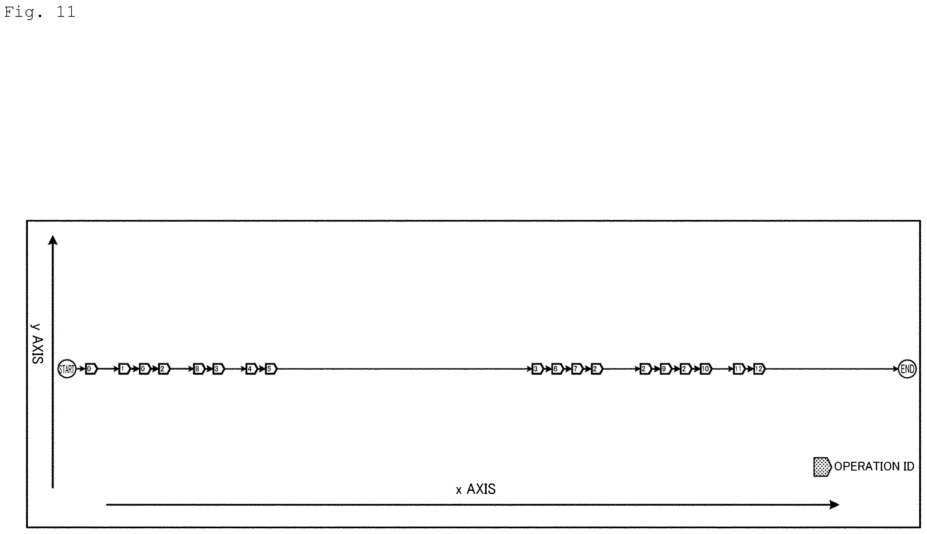

The visualization processing will be described with reference to Figs. 11 to 13. Figs. 11 to 13 are diagrams illustrating an example of visualization processing related to according to the embodiment. Hereinafter, visualization processing of operations of the main flow, visualization processing of operations other than the main flow, and visualization processing using a threshold' will be described in this order.

(2-1. Visualization processing of operations of main flow)

Visualization processing of operations of the main flow will be described with reference to Fig. 11. The visualization unit 15c highlights and visualizes operations of the main flow on one axis. At this time, the visualization unit 15c first extracts position IDs and operation IDs that appear with a threshold or more in the entire case. For example, in a case where the threshold is 80%, the visualization unit 15c extracts position IDs and operation IDs that appear in eight or more cases because there are ten cases in the example of Fig. 10. Next, the visualization unit 15c lines up and visualizes the extracted operation IDs from left to right (or from top to bottom) in the order of position IDs. For example, the visualization unit 15c performs visualization with the vertical direction defined as the y axis, the horizontal direction defined as the x axis, the y axis remaining fixed, and the x axis shifted in accordance with the position ID. In Fig. 11, the visualization unit 15c visualizes the operation ID "0" on the 1 portion of the x axis, for example, in a case where the position ID is "1." In addition, the visualization unit 15c may change the color of the node to a conspicuous color or increase the size of the node as a method of highlighting the operation of the main flow.

(2-2. visualization processing of operations other than main flow)

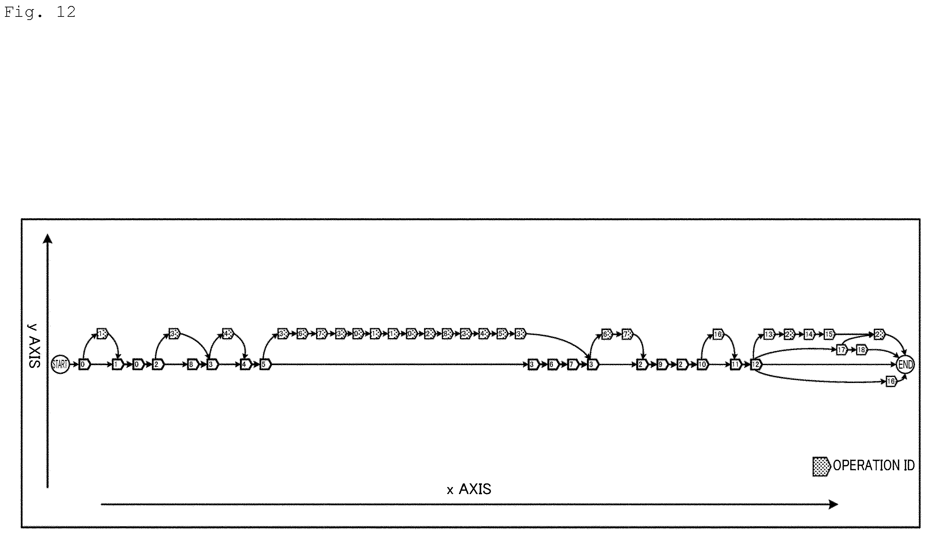

Visualization processing of operations other than the main flow will be described with reference to Fig. 12. The visualization unit 15c visualizes operations other than the main flow. In this case, the visualization unit 15c extracts position IDs and operation IDs that appear less than a threshold in the entire case. For example, in a case where the threshold is 80%, the visualization unit 15c extracts position IDs and operation IDs that appear in less than eight cases because there are ten cases in the example of Fig. 10. Next, the visualization unit 15c lines up and visualizes the extracted operation IDs from left to right (or from top to bottom) in the order of position IDs. In addition, the visualization unit 15c visualizes the operation at this time by shifting it from the main flow. For example, in Fig. 12, in a case where the main flow is displayed from left to right, the visualization unit 15c visualizes the y axis of operations other than the main flow by shifting it unlikely the main flow.

(2-3. Visualization processing using threshold')

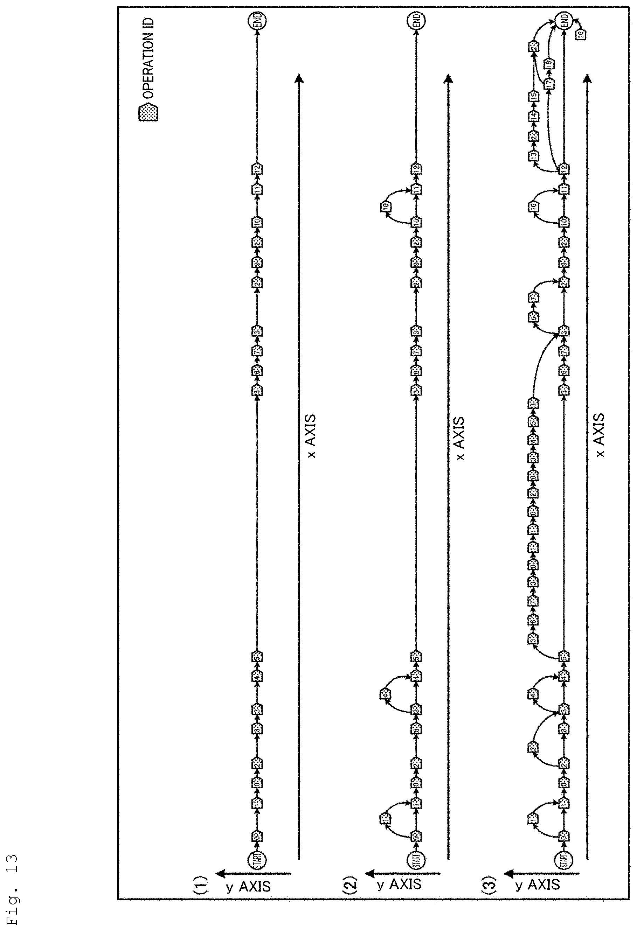

The visualization processing using a threshold' will be described with reference to Fig. 13. The visualization unit 15c sets a threshold' as another visualization example, and visualizes only operation IDs associated with position IDs of the threshold' or more. In addition, in the same way as the above-described visualization processing, a threshold for visualization is prepared so that the operation of the main flow and the operations of other flows can be distinguished from each other, and position IDs of the threshold or more are displayed as the main flow, and position IDs less than the threshold are displayed as operations of other flows, shifting them from the operation of the main flow. In addition, at this time, the operation that is the main flow may be highlighted.

In Fig. 13(1), the visualization unit 15c executes the visualization processing by setting threshold = 80% and threshold' = 80%. Therefore, the visualization unit 15c visualizes only the operations of the main flow. In Fig. 13(2), the visualization unit 15c executes the visualization processing by setting threshold = 80% and threshold' = 50%. Therefore, the visualization unit 15c visualizes operations that appear in 50% or more of operations of the main flow and operations other than the main flow. In Fig. 13(3), the visualization unit 15c executes the visualization processing by setting threshold = 80% and threshold' = 0%. Therefore, the visualization unit 15c visualizes all the operations.

[Flow of processing]

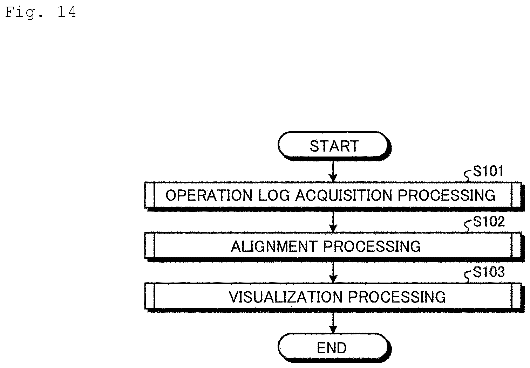

The flow of processing according to the present embodiment will be described in detail with reference to Figs. 14 to 17. Hereinafter, the overall flow of visualization display processing, the flow of operation log acquisition processing, the flow of alignment processing, and the flow of visualization processing will be described in this order.

(1. Overall Flow of visualization display processing)

The overall flow of visualization display processing will be described with reference to Fig. 14. Fig. 14 is a flowchart illustrating the overall flow of visualization display processing according to the embodiment. Hereinafter, the overall flow of processing will be described, and then the outline of each processing will be described.

(1-1. Overall flow of processing)

First, the acquisition unit 15a of the visualization display device 10 executes the operation log acquisition processing (step S101). Next, the alignment unit 15b of the visualization display device 10 executes the alignment processing (step S102). The visualization unit 15c of the visualization display device 10 then executes the visualization processing (step S103) and ends the processing. Meanwhile, steps S101 to S103 described above can also be executed in a different order. In addition, some of steps S101 to S103 described above may be omitted.

(1-2. Flow of each processing)

First, the operation log acquisition processing performed by the acquisition unit 15a will be described. In the operation log acquisition processing, the acquisition unit 15a collects and accumulates an operation log (information composed of "operation time, case ID, and operation location") from a terminal device. Meanwhile, the details of a flow of operation log acquisition processing will be described later in (2. Flow of operation log acquisition processing).

Second, the alignment processing performed by the alignment unit 15b will be described. In the alignment processing, the alignment unit 15b executes the following processes. First, the alignment unit 15b uses information on the operation log to generate an operation ID for identifying the operation. Next, the alignment unit 15b prepares an operation sequence in which operation IDs are lined up in the order of operation time for each case ID. Subsequently, the alignment unit 15b classifies the operation sequence into operation sequence types and assigns operation sequence IDs. The alignment unit 15b then extracts one operation sequence for each operation sequence type, and performs the alignment of the operation sequences using the method of multiple sequence alignment. Finally, the alignment unit 15b acquires the position ID and operation ID of the operation after alignment, and reflects them in the operation sequence for each case ID. Meanwhile, the details of a flow of alignment processing will be described later in (3. Flow of alignment processing).

Third, the visualization processing performed by the visualization unit 15c will be described. In the visualization processing, the visualization unit 15c executes the following processes. First, the visualization unit 15c uses the alignment result to extract position IDs that appear with a threshold or more from the entire case and operation IDs associated with the position IDs, and highlights and visualizes them by lining up the operations on one axis (main flow). Next, the visualization unit 15c uses the alignment result to extract position IDs that appear less than a threshold from the entire case and operation IDs associated with the position IDs. The visualization unit 15c then displays adjacent position IDs above and below (in a case where the main flow is visualized from left to right) or to the left and right of (in a case where the main flow is visualized from top to bottom) the visualized main flow, and connects edges on the basis of the order of position IDs for each case. Meanwhile, the details of a flow of visualization processing will be described later in (4. Flow of visualization processing).

(2. Flow of operation log acquisition processing)

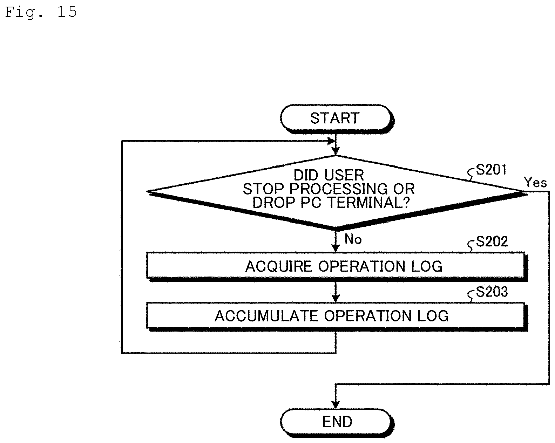

A flow of operation log acquisition processing will be described with reference to Fig. 15. Fig. 15 is a flowchart illustrating a flow of operation log acquisition processing according to the embodiment. Meanwhile, the following steps S201 to S203 can also be executed in a different order. In addition, some of the following steps S201 to S203 may be omitted.

First, in a case where a user stops the process or drops a personal computer (PC) terminal (step S201: Yes), the acquisition unit 15a ends the process. On the other hand, in a case where the user has neither stop the process nor dropped the PC terminal (step S201: No), the acquisition unit 15a acquires an operation log (step S202). Next, the acquisition unit 15a accumulates the operation log by storing the acquired operation log in the operation log storage unit 14a (step S203), and proceeds to the process of step S201.

(3. Flow of alignment processing)

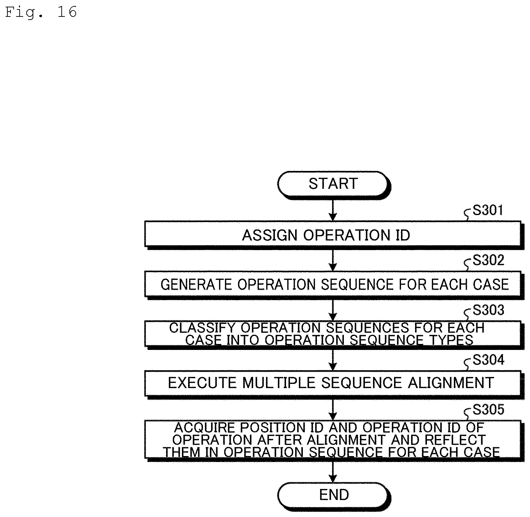

A flow of alignment processing will be described with reference to Fig. 16. Fig. 16 is a flowchart illustrating a flow of alignment processing according to the embodiment. Meanwhile, the following steps S301 to S305 can also be executed in a different order. In addition, some of the following steps S301 to S305 may be omitted.

First, the alignment unit 15b assigns an operation ID using information in the operation log of the operation log storage unit 14a (step S301). At this time, the alignment unit 15b may assign an operation ID using information in the operation log acquired by the acquisition unit 15a. Next, the alignment unit 15b generates an operation sequence for each case from the operation log (step S302). Subsequently, the alignment unit 15b classifies the operation sequence for each case into operation sequence types (step S303). At this time, the alignment unit 15b determines the classification into the operation sequence types by whether the operation sequence completely matches. Meanwhile, the amount of calculation of the process of step S304 can be reduced by executing the process of step S303.

The alignment unit 15b then performs multiple sequence alignment using the operation sequence for each operation sequence type (step S304). Here, in a case where progressive alignment which is one of the multiple sequence alignment methods is used, the alignment unit 15b creates a distance matrix of the operation sequence from the calculation of the sequence alignment of the operation sequence, creates a tree diagram from the distance matrix of the operation sequence, and aligns the operation sequence in the order of shortest distance on the tree diagram. Meanwhile, the alignment unit 15b may use a sequential improvement method, simulated annealing, or the like as methods other than the progressive alignment.

Finally, the alignment unit 15b acquires the position ID and operation ID of the operation after alignment, reflects them in the operation sequence for each case (step S305), and ends the process.

(4. Flow of visualization processing)

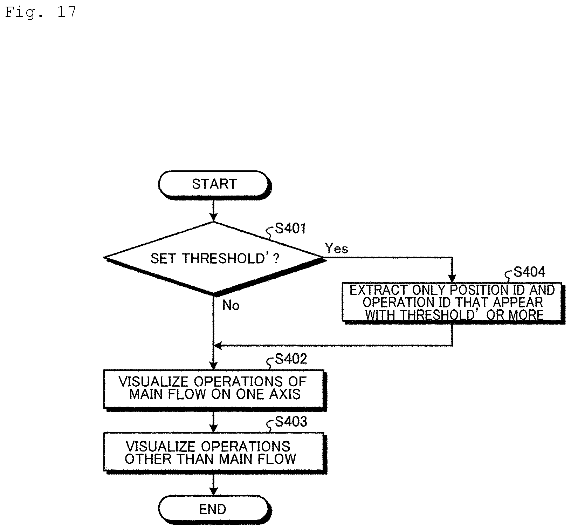

A flow of visualization processing will be described with reference to Fig. 17. Fig. 17 is a flowchart illustrating a flow of visualization processing related to according to the embodiment. Meanwhile, the following steps S401 to S404 can also be executed in a different order. In addition, some of the following steps S401 to S404 may be omitted.

First, in a case where a threshold' is set (step S401: Yes), the visualization unit 15c sets the threshold', extracts only position IDs and operation IDs that appear with the threshold' or more for all the cases (step S404), and proceeds to the process of step S402. On the other hand, in a case where the threshold' is not set (step S401: No), the visualization unit 15c sets the threshold, and highlights and visualizes position IDs and operation IDs (operations of the main flow) that appear with the threshold or more for all the cases by lining up the operation IDs on one axis in the order of the position IDs (step S402). At this time, the visualization unit 15c may change the color of the node to a conspicuous color or increase the size of the node as a method of highlighting the main flow.

The visualization unit 15c then visualizes position IDs and operation IDs (operations other than the main flow) that do not satisfy the threshold for all the cases on the visualization result visualized in the process of step S402, with these IDs shifted from one axis (step S403), and ends the process.

[Effects of embodiment]

First, in the visualization display processing according to the present embodiment described above, an operation log is acquired, an operation sequence in units of operations arrayed in a time series order for each case is generated on the basis of the operation log, the operation sequence in units of operations is aligned, operation types that appear with a threshold or more at the same position in the operation sequence in units of operations of each case are specified as the operation types of the main flow on the basis of the aligned operation sequence in units of operations, and nodes corresponding to the operation types of the main flow are arranged and visualized in a time series order on one axis.

Therefore, in the present processing, it is possible to easily specify a main flow in business analysis.

Second, in the visualization display processing according to the present embodiment described above, operations of the same type are specified by extracting information on the operation location from the operation log, the operation sequence in units of operations is aligned through pairwise alignment, the distance matrix for each operation sequence in units of operations is generated, the distance vector is generated using the distance matrix, and the operation sequence is further aligned through multiple sequence alignment in the order of the operation sequence in units of operations having the smaller distance vector. Therefore, in the present processing, the main flow can be easily and effectively specified in business analysis.

Third, in the visualization display processing according to the present embodiment described above, the reference value of an operation to be visualized is further set, nodes corresponding to the operation type of the main flow are arranged in a time series order on one axis, among the nodes corresponding to the operation types that appear with the reference value or higher of the operation, and the nodes corresponding to the operation types other than the operation type of the main flow are arranged and visualized in a time series order at positions different from on one axis. In the present processing, the main flow and flows other than the main flow desired to be visualized can be easily and effectively specified in business analysis.

[Modification example of embodiment]

Hereinafter, processing of a visualization display system according to a modification example of the embodiment (appropriately, the present modification example), the configuration of the visualization display device 10, the details of processing, and the flow of processing will be described in order, and finally the effects of the present modification example will be described. Meanwhile, the same configurations and processes as in the above-described embodiment will not be described.

[Processing of visualization display system]

Processing of the visualization display system according to the modification example of the embodiment will be described below. Processing of the above system will be described below in comparison with the related art.

(Conventional visualization display processing)

The conventional visualization display processing also has the following problems in addition to the problems described in the processing of the visualization display system according to the embodiment. First, in a case where improvement of business centered on PC operations is performed in business analysis, business analysis is performed from the viewpoint of which work (specifically, which operation is performed on which screen) should be improved, but when the process is visualized at the granularity of operations, information is too detailed and business analysis is difficult, whereby business analysis cannot be performed efficiently (problem e). In addition, when processing is performed using a set of operations for each case, there is a problem in that as the number of cases increase, the processing time due to sequence alignment for the set of operations included in the case increases enormously. (problem f).

(Visualization display processing according to present modification example)

In visualization display processing according to the present modification example, the operation sequence (operations in the order of operation time) for each case related to the same work is used as an input, and alignment is performed at the granularity of windows on the basis of the method of multiple sequence alignment, and then operation locations that appear in each window are aligned. Finally, for all the cases, operations that appear with a threshold or more are extracted as the main flow, and operations less than the threshold are extracted as operations other than the main flow, so that these operations are visualized distinctly. That is, in the visualization display processing according to the present modification example, in addition to the processing of the present embodiment, a set of operations for each case is first processed at the granularity of screens, the granularity of operations for each screen is next processed to reduce the processing time, the main flow is visualized at the granularity of screens and the granularity of operations, and thus it is possible to efficiently specify a screen to be improved by introducing RPA or the like and an operation in the screen.

Therefore, in the visualization display processing according to the present modification example, the process speed can be improved in addition to the processing of the present embodiment. In addition, in the visualization display processing according to the present modification example, it is possible to ascertain the main flow at the granularity of windows (screens) and the granularity of operations, making it easier to select screens and operations to be improved. From the above, the visualization display processing according to the present modification example contributes to solving the above problems e and f.

[Configuration of visualization display device 10]

The configuration of the visualization display device 10 according to the present modification example will be described in detail. The configuration of the visualization display device 10 according to the present modification example is the same as that of the visualization display device 10 according to the present embodiment, and the processing of the input unit 11, the output unit 12, and the communication unit 13 of the visualization display device 10 according to the present modification example is the same as that of the visualization display device 10 according to the present embodiment, so the description thereof will be omitted. Hereinafter, only the storage unit 14 and the control unit 15 will be described, and description common to the storage unit 14 and the control unit 15 according to the present embodiment will be omitted.

(1. Storage unit 14)

The storage unit 14 stores various types of information referred to when the control unit 15 operates and various types of information acquired when the control unit 15 operates. The storage unit 14 has the operation log storage unit 14a.

(1-1. Operation log storage unit 14a)

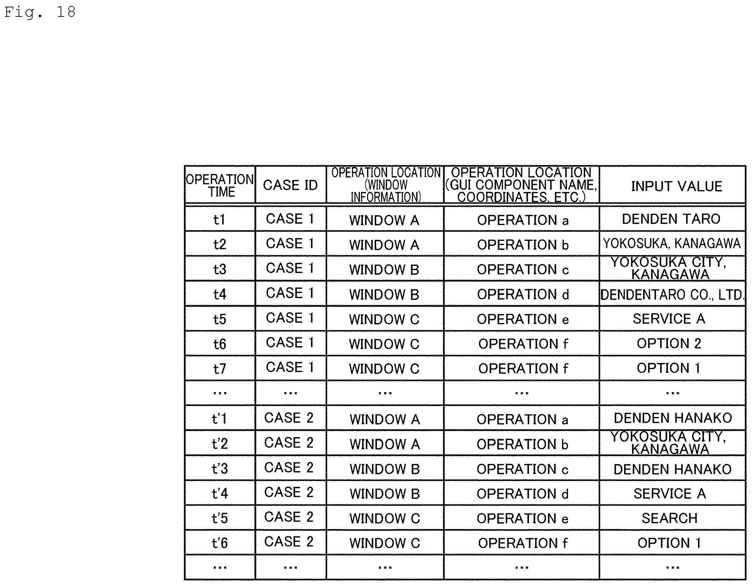

An example of an operation log stored in the operation log storage unit 14a will be described with reference to Fig. 18. Fig. 18 is a diagram illustrating an example of an operation log stored in a storage unit according to a modification example of the embodiment. The operation log storage unit 14a stores an operation log. For example, the operation log storage unit 14a stores "operation time," "case ID," "operation location (window information)," "operation location (GUI component, coordinates, etc.)," and "input value" as an operation log.

(2. Control unit 15)

The control unit 15 takes charge of control of the visualization display device 10 as a whole. The control unit 15 includes an acquisition unit 15a, an alignment unit 15b, and the visualization unit 15c. Meanwhile, the processing of the acquisition unit 15a is common to the processing of the present embodiment, and thus the description thereof will be omitted.

(2-1. Alignment unit 15b)

The alignment unit 15b generates an operation sequence in units of windows arrayed in a time series order for each case, and aligns the operation sequence in units of windows.

(2-2. Visualization unit 15c)

The visualization unit 15c specifies window operations that appear with a threshold or more at the same position in the operation sequence in units of windows of each case as windows of the main flow on the basis of the aligned operation sequence in units of windows, arranges the nodes corresponding to the windows of the main flow in a time series order on one axis, arranges the nodes corresponding to windows other than the windows of the main flow in a time series order at positions different from on the one axis, and superimposes and visualizes the nodes corresponding to the operations of each window. In addition, the visualization unit 15c further sets a reference value of windows to be visualized, arranges the nodes corresponding to the windows of the main flow in a time series order on one axis, among the nodes corresponding to windows that appear with the reference value or higher of the window, and arranges and visualizes the nodes corresponding to the windows other than the main flow in a time series order at positions different from on the one axis.

[Details of processing]

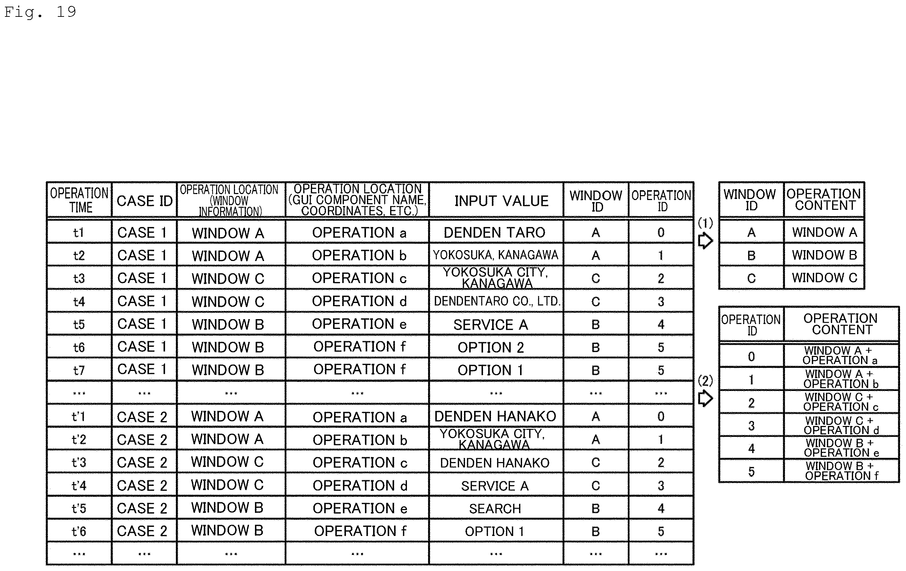

The details of processing according to the present modification example will be described with reference to Figs. 19 to 34, formulas, and the like. Hereinafter, alignment processing and visualization processing will be described in detail.

(1. Alignment processing)

The alignment processing will be described with reference to Figs. 19 to 32, formulas, and the like. Figs. 19 to 32 are diagrams illustrating an example of alignment processing according to the modification example of the embodiment. Hereinafter, ID creation processing, operation sequence generation processing, operation sequence classification processing, sequence alignment processing 1, position ID assignment processing, ID association processing, and sequence alignment processing 2 will be described in this order.

(1-1. ID creation processing)

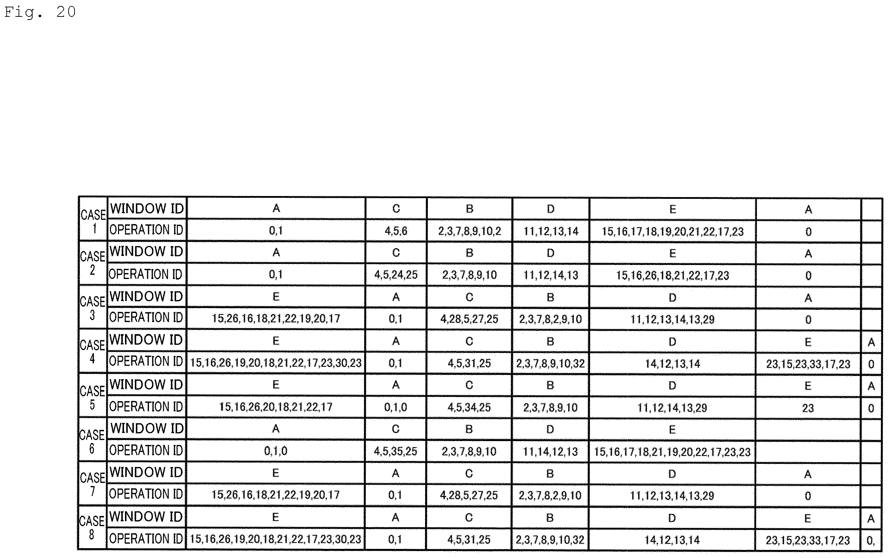

The ID creation processing will be described with reference to Figs. 19 and 20. The alignment unit 15b of the visualization display device 10 creates a window ID and an operation ID from the operation log data. In Fig. 19, the alignment unit 15b assigns, for example, window IDs "A" to "C" to operation contents "window A" to "window C," respectively (see Fig. 19(1)). Meanwhile, the assignment of the operation ID is the same as the processing according to the present embodiment, the description thereof will be omitted (see Fig. 19(2)).
In addition, the alignment unit 15b extracts the window ID and operation ID for each case from the operation log. In Fig. 20, the alignment unit 15b extracts, for example, "A" as the window ID of the case ID "case 1," and "0" and "1" as the operation ID.

(1-2. Operation sequence generation processing)

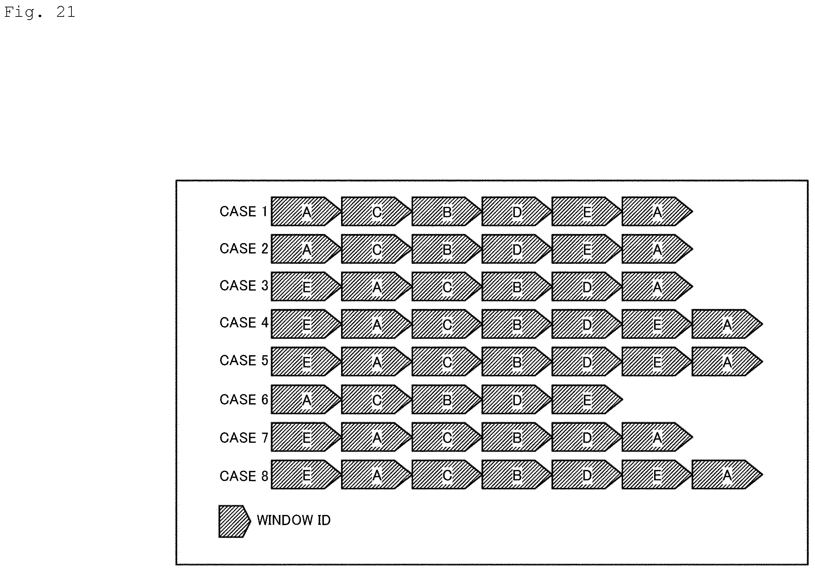

The operation sequence generation processing will be described with reference to Fig. 21. The alignment unit 15b generates an operation sequence based on window IDs in the order of operation time for each case ID of the operation log acquired from the operation log storage unit 14a. In Fig. 21, the alignment unit 15b generates, for example, an operation sequence of "A, C, B, D, E, A" as an operation sequence based on the window ID of the case ID "case 1," and an operation sequence of "E, A, C, B, D, A" as an operation sequence based on the window ID of the case ID "case 3." In addition, in Fig. 21, the alignment unit 15b generates an operation sequence based on window IDs in the order of operation time for eight cases with cases ID "case 1" to "case 8."

(1-3. Operation sequence classification processing)

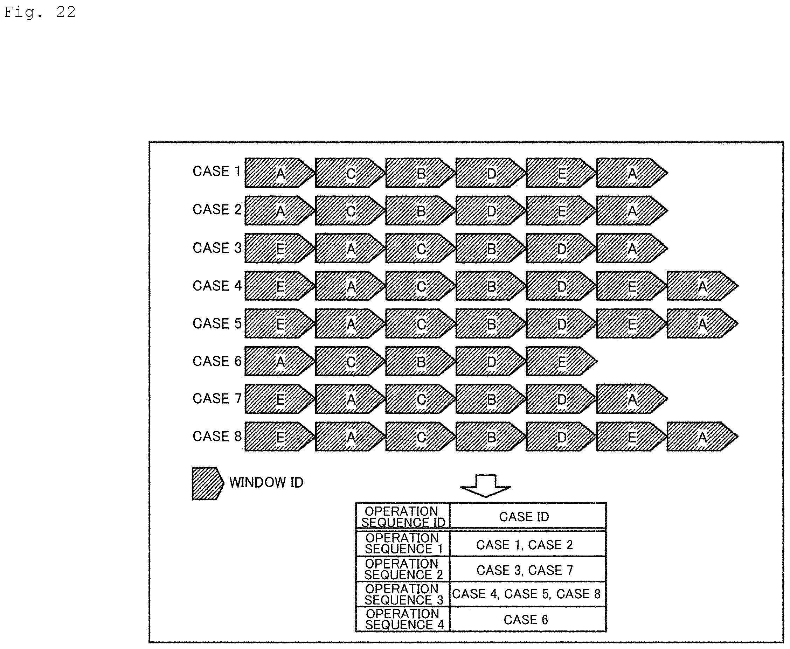

The operation sequence classification processing will be described with reference to Fig. 22. The alignment unit 15b compares the types and orders of operations in the operation sequences and classifies them into types of operation sequences. At this time, the alignment unit 15b determines whether the operation sequence completely matches as a method of determining an operation type. In Fig. 22, the alignment unit 15b classifies, for example, "case 1" and "case 2" into the operation sequence ID "operation sequence 1" because "A, C, B, D, E, A" completely matches as the operation sequence based on the window ID of the case ID "case 1" and "case 2." In addition, in Fig. 22, similarly, the alignment unit 15b classifies "case 3" and "case 7" into "operation sequence 2," "case 4," "case 5," and "case 8" into "operation sequence 3," and only "case 6" into "operation sequence 4."

(1-4. Sequence alignment processing 1)

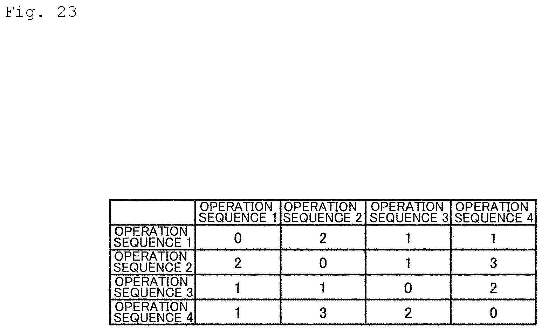

The sequence alignment processing 1 will be described with reference to Figs. 23 to 27. Hereinafter, the outline of the sequence alignment processing 1 will be described, and then the details of the sequence alignment processing 1 will be described. Meanwhile, the present processing is similar to the sequence alignment processing according to the embodiment, but the present processing differs from the sequence alignment processing in that the processing target is not the operation sequence of operations but the operation sequence of windows. In addition, a method of obtaining s(x, y) in applying sequence alignment may use the matching degree of the operation type included in the window ID or the difference in the sequence alignment of the operation IDs.

(1-4-1. Outline)

The alignment unit 15b uses an operation sequence for each operation sequence type and performs sequence alignment of operation sequences using a progressive alignment method which is one of multiple sequence alignment methods. Specifically, first, the alignment unit 15b applies a sequence alignment method (pairwise alignment) to two operation sequences, extracts a difference score between these operation sequences, and stores it in a distance matrix (procedure 1). Second, the alignment unit 15b calculates the distance matrix of the operation sequences as shown in Fig. 23 by applying the above procedure 1 to all the operations sequences, extracts the distance vector for each operation sequence from the distance matrix, obtains a distance between the operation sequences from the distance vector, and creates a tree diagram assembled from the operation sequences with a short distance therebetween (procedure 2). Third, the alignment unit 15b further performs sequence alignment (multiple sequence alignment) of the operation sequences with a short distance therebetween (procedure 3).

(1-4-2. Details)

(1-4-2-1. Procedure 1-1)

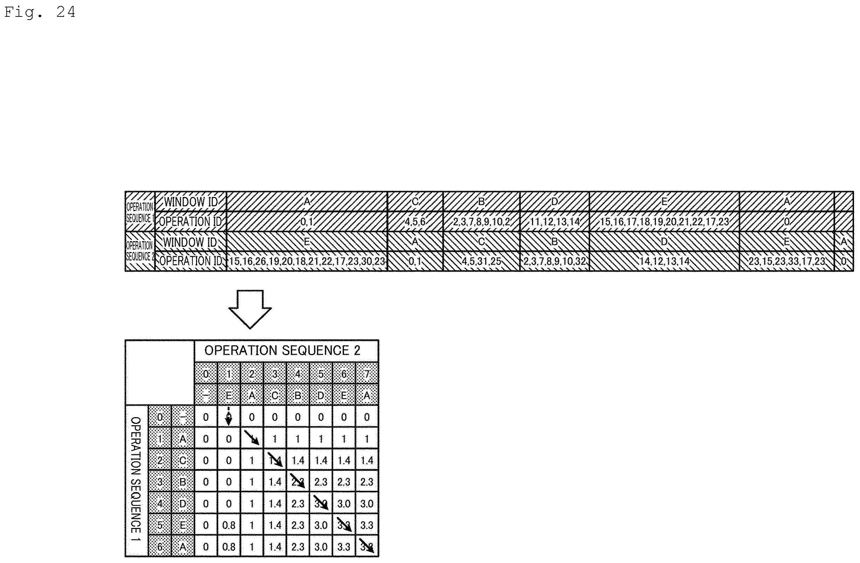

The details of procedure 1-1 of sequence alignment processing 1 will be described with reference to Fig. 24. After setting a specific score calculation recurrence formula, the alignment unit 15b defines a problem of finding a path for maximizing the score among the paths from the upper left cell to the lower right cell, and solves it using a dynamic programming method. However, the alignment unit 15b may use algorithms other than the dynamic programming method.

For example, the alignment unit 15b performs procedure 1-1 using the score calculation recurrence formula shown in Formula (1) described in the sequence alignment processing according to the embodiment.

In Formula (1), (i, j) represents the coordinates of (column, row) in the table at the lower part of Fig. 24. In addition, $F(i, j)$ is a score on the path at coordinates (i, j). In addition, in Formula (1), the score penalty is set to d = 0. Further, $s(x_i, y_j)$ is set to (the number of matching operation types - the number of all operation types) in a case where the window ID matches at a certain position, and set to -1 in a case where the window ID does not match. That is, in Fig. 24, the matching degree of the operation type included in the window ID is used as a method of obtaining s (x, y) .

In Fig. 24, the alignment unit 15b calculates a difference score (distance matrix) from "operation sequence 1" and "operation sequence 2." For example, in a case where the score on the path of F(3, 2) is calculated, the window ID of "operation sequence 2" (i = 3) is "C," the window ID of "operation sequence 1" (j = 2) is "C," and the window IDs match, so that the calculation is performed as $s(x_i, y_j)$ = (the number of matching operation types ÷ the number of all operation types). That is, in s(3, 2), the number of all operation types for the window ID "C" of "operation sequence 1" and "operation sequence 2" is "4, 5, 6, 25, 31," which is five types, two of which are common. Thus, the relation of s(3, 2) = 2/5 = 0.4 is established. From the above, as shown in the following Formula (4), F(3, 2) = 1.4 is calculated by obtaining the maximum value as a solution.

[Formula 4]

$$F(3,2) = max \begin{cases} F(2,1) + s(3,2) = 1 + \left(\dfrac{2}{5}\right) = 1.4 \\ F(2,2) - d = 1 \\ F(3,1) - d = 1 \end{cases} = 1.4 \quad \cdots (4)$$

The alignment unit 15b executes the sequence alignment of "operation sequence 1" and "operation sequence 2" by calculating the score on the above path for all the cells and performing a process of finding a path for maximizing the score among the paths from the upper left cell to the lower right cell in Fig. 24. At this time, in a case where there is "→" or "↓" in the operation sequence, the alignment unit 15b lines up the operation sequence with a blank "-" in that portion. That is, "operation sequence 1" aligns with "-, A, C, B, D, E, A," and "operation sequence 2" aligns with "E, A, C, B, D, E, A."

The alignment unit 15b then compares the aligned operation ID sequence, calculates the number of window IDs that do not match at the compared positions as a difference score, and stores it in the distance matrix. That is, when the window ID sequences of the aligned "operation sequence 1" and "operation sequence 2" are compared with each other, one window ID differs in the corresponding sequence, and thus the difference score is calculated as "1" and stored in the distance matrix.

(1-4-2-2. Procedure 1-2)

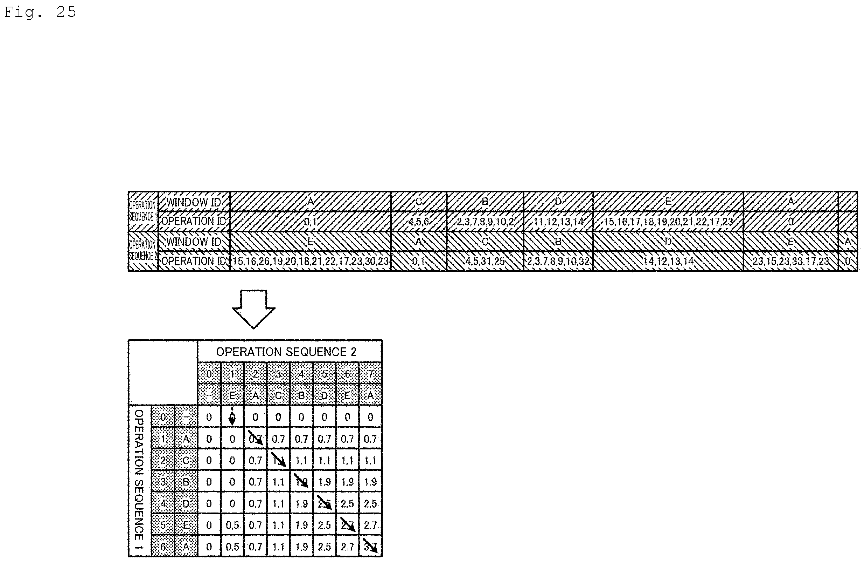

The details of procedure 1-2 of sequence alignment processing 1 will be described with reference to Fig. 25. Here, procedure 1-2 differs from the above procedure 1-1 in a method of obtaining s(x, y), and thus the description of the common processing will be omitted.

For example, the alignment unit 15b performs procedure 1-2 using the score calculation recurrence formula shown in Formula (1) described in the sequence alignment processing according to the embodiment.

In Formula (1), (i, j) represents the coordinates of (column, row) in the table at the lower part of Fig. 25. In addition, $F(i, j)$ is a score on the path at coordinates (i, j). In addition, in Formula (1), the score penalty is set to d = 0.

Further, in s(x$_i$, y$_j$), sequence alignment may be performed when the window ID matches at a certain position, and +1 may be set when the difference is 0. When the difference is 1 or more, the number of operations after sequence alignment may be set to a denominator and the numerator may be set to (the number of operations after sequence alignment - difference). In addition, -1 is set when the window ID does not match.

That is, in Fig. 25, the difference in sequence alignment of operation IDs is used as a method of obtaining s(x, y).

In Fig. 25, the alignment unit 15b calculates a difference score (distance matrix) from "operation sequence 1" and "operation sequence 2." For example, in a case where the score on the path of F(3, 2) is calculated, the window ID of "operation sequence 2" (i = 3) is "C," the window ID of "operation sequence 1" (j = 2) is "C," and the window IDs match, so that sequence alignment is performed on the operation IDs of "C" of "operation sequence 1" and "operation sequence 2." As a result of sequence alignment, the operation ID of "C" of "operation sequence 1" is "4, 5, 6, -, -," the operation ID of "C" of "operation sequence 2" is "4, 5, -, 31, 25," the difference is 3 (number of "-"), and the number of operations after sequence alignment is 5. Thus, the relation of s(3, 2) = (5-3)/5 = 2/5 is established. From the above, as shown in the following Formula (5), F(3, 2) = 1.1 is calculated by obtaining the maximum value as a solution.

[Formula 5]

$$F(3,2) = max \begin{cases} F(2,1) + s(3,2) = 0.7 + \left(\dfrac{2}{5}\right) = 1.1 \\ F(2,2) - d = 0.7 \\ F(3,1) - d = 0.7 \end{cases} = 1.1 \quad \cdots (5)$$

The alignment unit 15b executes sequence alignment of "operation sequence 1" and "operation sequence 2" in the same way as the above procedure 1-1. As a result, "operation sequence 1" is aligned as "-, A, C, B, D, E, A" and "operation sequence 2" is aligned as "E, A, C, B, D, E, A," the difference score is calculated as "1."

(1-4-2-3. Procedure 2)

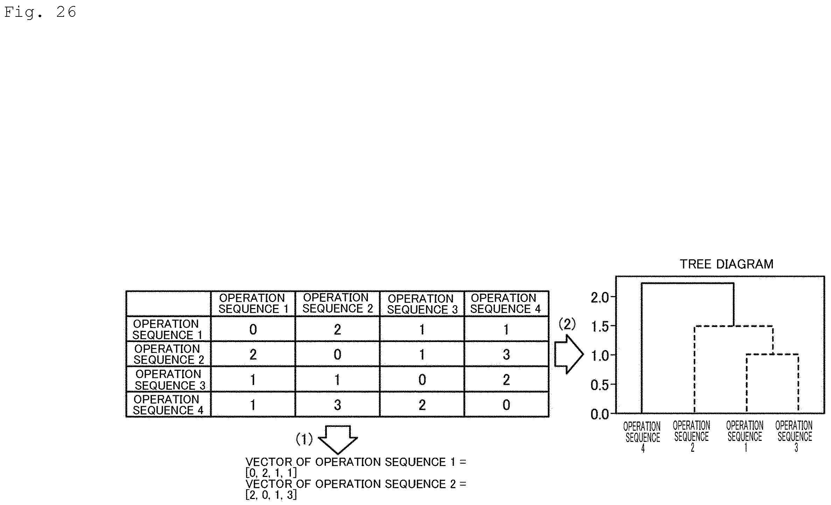

The details of procedure 2 of the sequence alignment processing 1 will be described with reference to Fig. 26. First, the alignment unit 15b calculates the distance matrix of the operation sequences as shown in Fig. 23 by applying the above procedure 1-1 or procedure 1-2 to all the operations sequence, and calculates the distance vector for each operation sequence using the calculated distance matrix (see Fig. 26(1)).

In Fig. 26(1), the alignment unit 15b calculates, for example, the distance vector of "operation sequence 1" as [0, 2, 1, 1], and calculates the distance vector of "operation sequence 2" as [2, 0, 1, 3].

Next, the alignment unit 15b creates a tree diagram on the basis of a hierarchical clustering method using the distance vector for each operation sequence (see Fig. 26(2)). At this time, the alignment unit 15b performs calculation of the distance between operation sequences using a vector distance calculation method such as cosine similarity, but there is no particular limitation thereto.

In Fig. 26(2), the alignment unit 15b uses the distance vectors of "operation sequence 1" to "operation sequence 4" to visualize the distance of operation sequences using a tree diagram, and specifies "operation sequence 3," "operation sequence 1," "operation sequence 2," and "operation sequence 4" as having a shorter distance in this order. Meanwhile, the purpose of the present processing is not to create a tree diagram, but to specify the operation sequences in the order of shortest distance.

(1-4-2-4. Procedure 3)

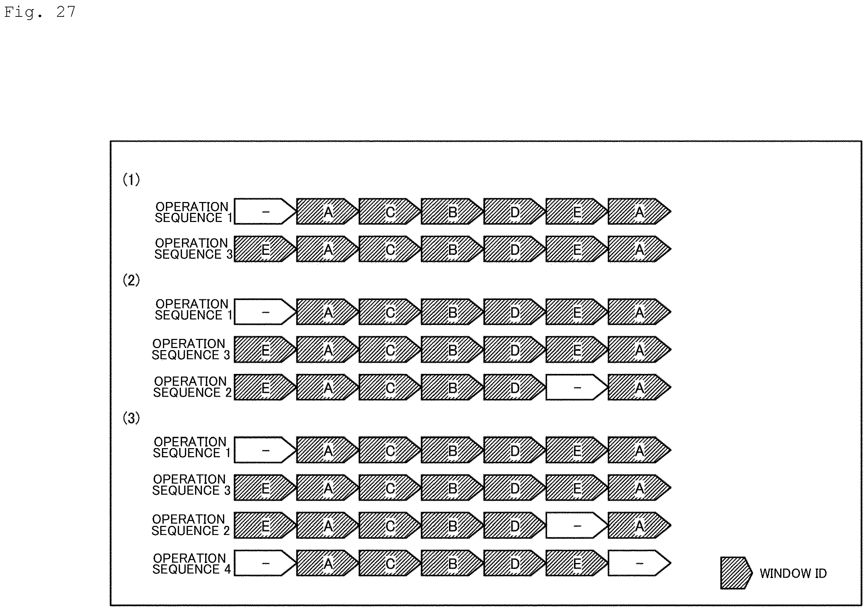

The details of procedure 3 of the sequence alignment processing 1 will be described with reference to Fig. 27. The alignment unit 15b aligns the operation sequences obtained through the above procedure 2 in the order of shortest distance (smallest value). At this time, the alignment unit 15b aligns the operation sequences in the same ways as the sequence alignment method in the above procedure 1-1 or procedure 1-2.

In Fig. 27, first, the alignment unit 15b aligns "operation sequence 1" and "operation sequence 3" (see Fig. 27(1)). Second, the alignment unit 15b aligns "operation sequence 2," and "operation sequence 1" and "operation sequence 3" after alignment (see Fig. 27(2)). Third, the alignment unit 15b aligns "operation sequence 4," and "operation sequence 1," "operation sequence 2," and "operation sequence 3" after alignment (see Fig. 27(3)).

(1-5. Position ID assignment processing)

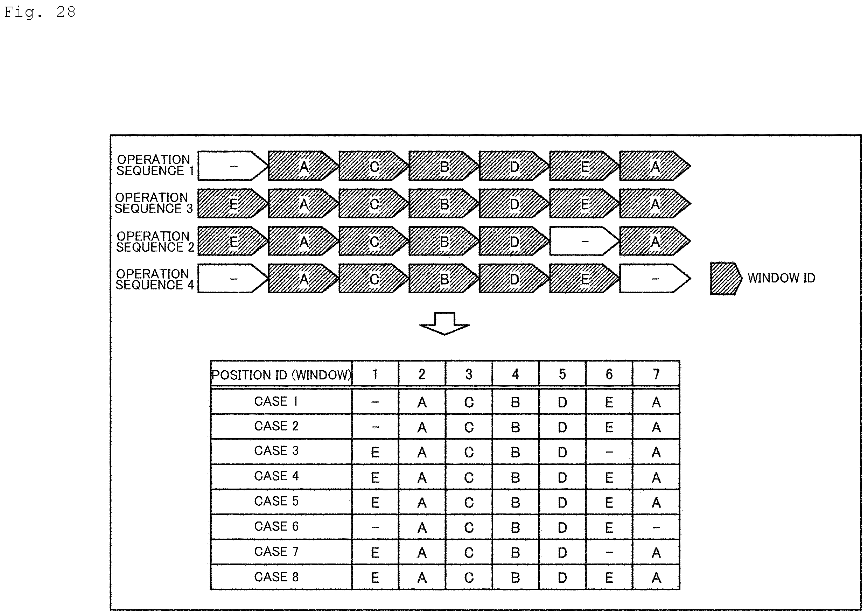

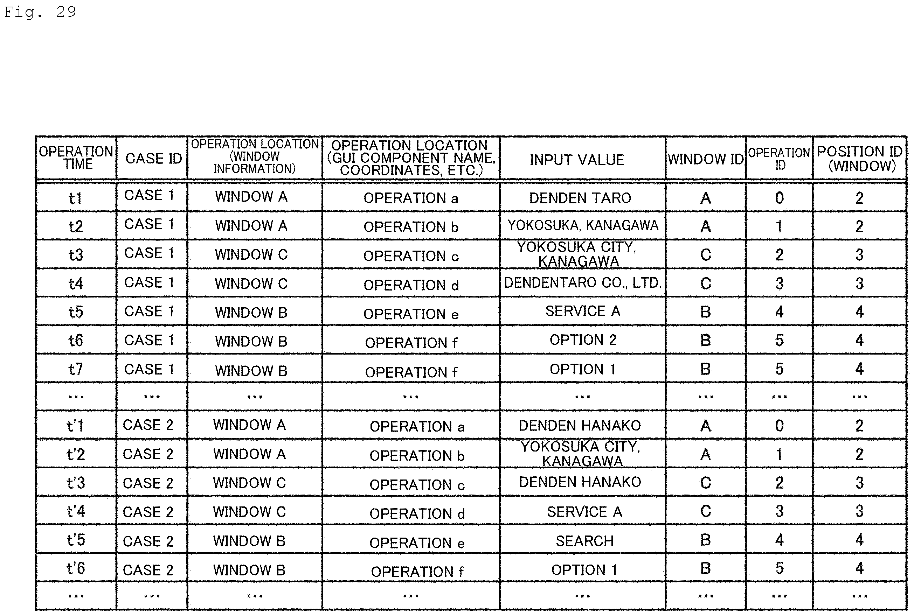

The position ID assignment processing will be described with reference to Figs. 28 and 29. First, the alignment unit 15b reflects the result after the alignment of the operation sequence IDs in the case ID. In the lower part of Fig. 28, the alignment unit 15b reflects, for example, the operation sequences of "case 1" and "case 2" as the result after the alignment of "operation sequence 1," and reflects the operation sequences of "case 3" and "case 7" as the result after the alignment of "operation sequence 2." Next, the alignment unit 15b assigns a position ID (window) to each sequence of the result after alignment. In the lower part of Fig. 28, the alignment unit 15b assigns "1" to "7" as a position ID (window) common to "case 1" to "case 8."

In addition, the alignment unit 15b assigns a position ID (window) to the original operation log. In Fig. 29, in the alignment unit 15b, for example, "case 1" continues with window IDs "A, B ···," and a location where the window ID first appears is a position ID (window) "2" as compared with the position ID (window) in Fig. 28.

(1-6. ID association processing)

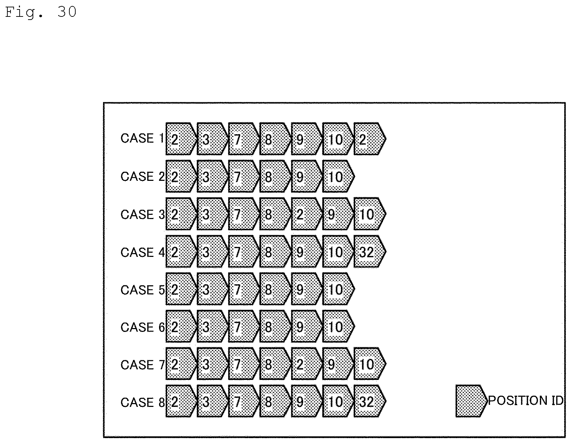

The ID association processing will be described with reference to Fig. 30. The alignment unit 15b prepares an operation sequence lined up in the order of operation time of the operation ID for each case ID, for each position ID (window). The alignment unit 15b associates, for example, the position ID (window) "4" and the operation ID for window ID "B," and creates an operation sequence in units of operations for each case ID as shown in Fig. 30.

(1-7. Sequence alignment processing 2)

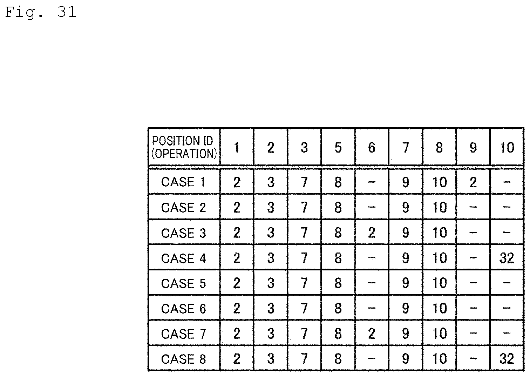

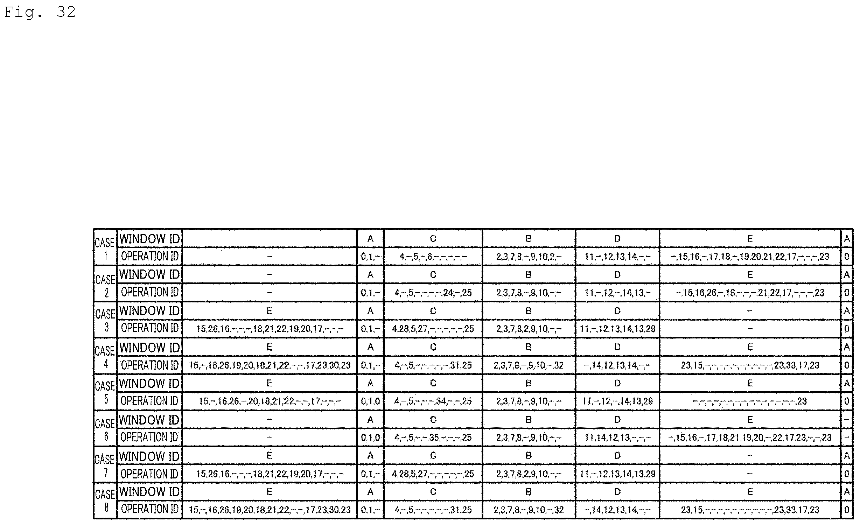

The sequence alignment processing 2 will be described with reference to Figs. 31 and 32. The operation sequence for each case ID is aligned on the basis of the sequence alignment method for each position ID (window) using the same method as the processing executed in the operation sequence classification processing, the sequence alignment processing 1, the position ID assignment processing, and the ID association processing described above. The alignment unit 15b aligns, for example, the operation ID for each position ID (window) "4" and window ID "B," and creates an operation sequence in units of operations for each case ID as shown in Fig. 31. Similarly, the alignment unit 15b aligns all the operation contents as shown in Fig. 32. Meanwhile, since the above processing can be performed independently for each position ID (window), the processing time can be reduced by performing parallel processing.

(2. Visualization processing)

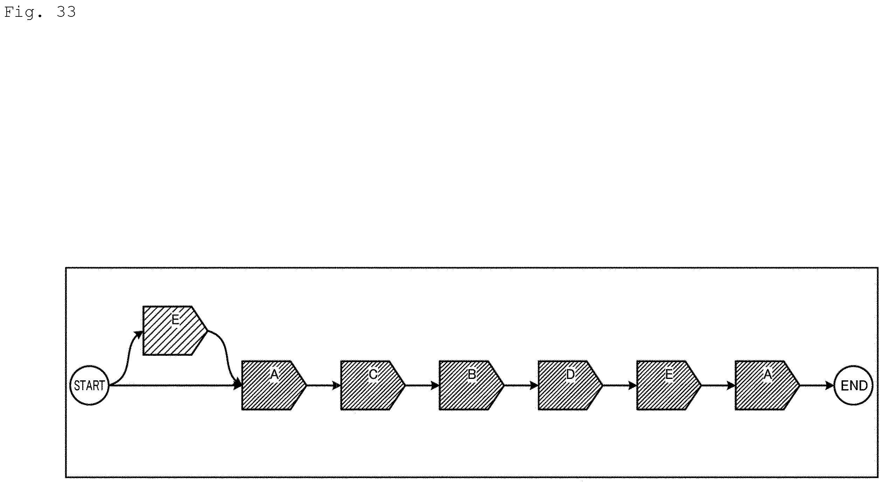

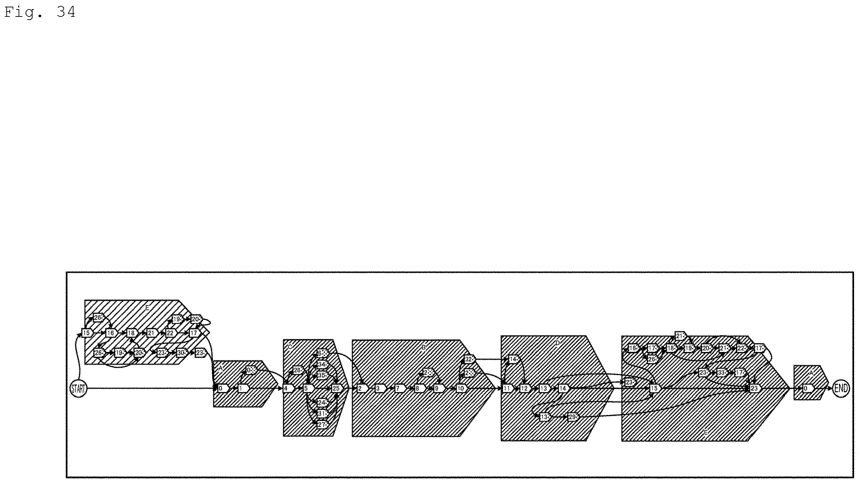

The visualization processing will be described with reference to Figs. 33 and 34. Figs. 33 and 34 are diagrams illustrating an example of visualization processing related to the embodiment. Hereinafter, the window visualization processing and the operation visualization processing will be described in this order.

(2-1. Window visualization processing)

The window visualization processing will be described with reference to Fig. 33. The visualization unit 15c uses the alignment result (the result of alignment at the granularity of windows) to extract the position IDs (windows) that appear with a threshold or more for all the cases and the window IDs associated with the position IDs (windows), and highlights and visualizes them by lining up the window IDs on one axis in the order of the position IDs (windows). At this time, the visualization unit 15c visualizes other window IDs that do not satisfy the threshold by shifting them up and down (in the case of visualization from left to right) or left and right (in the case of visualization from top to bottom).

For example, in a case where the position IDs (windows) that appear at a threshold of 80% for all the cases are visualized, the visualization unit 15c extracts position IDs (windows) and window IDs that appear in seven or more cases as windows of the main flows because there are eight cases in the example of Fig. 33. That is, the visualization unit 15c extracts "A" to "D" that appear in seven or more cases as windows of the main flow. Next, the visualization unit 15c lines up and visualizes the extracted operation IDs from left to right (or from top to bottom) in the order of position IDs. In addition, the visualization unit 15c may change the color of the node to a conspicuous color or increase the size of the node as a method of highlighting the operation of the main flow.

On the other hand, the visualization unit 15c extracts "E" that does not appear in seven or more cases as a window other than the main flow. In addition, the visualization unit 15c visualizes the window at this time by shifting it from the main flow.

(2-2. Operation visualization processing)

The operation visualization processing will be described with reference to Fig. 34. The visualization unit 15c extracts the position IDs (operations) that appear with a threshold or more for all the cases included in the extracted position IDs (windows) and the operation IDs associated with the position IDs (operations), and displays the operation IDs in each position ID (window) as the main flow on one axis in the order of the position IDs (operations). Other operations that do not satisfy the threshold are visualized by shifting them up and down (in the case of visualization from left to right) or left and right (in the case of visualization from top to bottom) within each position ID (window).

For example, in a case where the position IDs (windows) and position IDs (operations) that appear at a threshold of 80% for all the cases are visualized, as shown in Fig. 34, the visualization unit 15c displays the main flow (windows, operations) on one axis, and displays the operations other than the main flow so as to be superimposed on the corresponding window.

[Flow of processing]

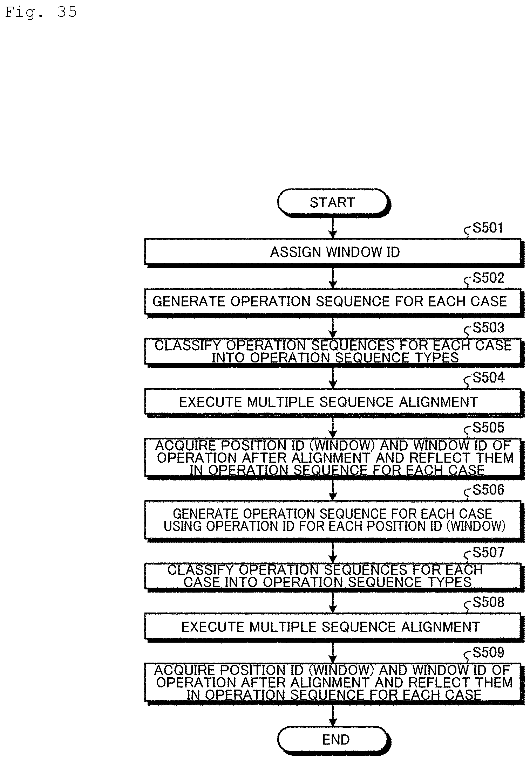

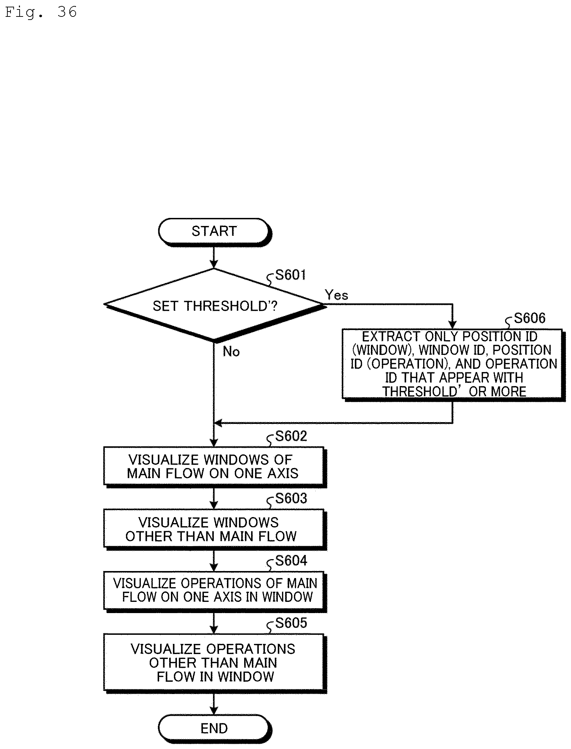

A flow of processing according to the present modification example will be described in detail with reference to Figs. 35 and 36. Hereinafter, the overall flow of visualization display processing and the flow of operation log acquisition processing which are common to the processing according to the present embodiment will not be described, and the flow of alignment processing and the flow of visualization processing will be described.

(1. Flow of alignment processing)

A flow of alignment processing will be described with reference to Fig. 35. Fig. 35 is a flowchart illustrating a flow of alignment processing according to the modification example of the embodiment. Meanwhile, the following steps S501 to S509 can also be executed in a different order. In addition, some of the following steps S501 to S509 will be omitted.

First, the alignment unit 15b assigns a window ID using information in the operation log of the operation log storage unit 14a (step S501). Second, the alignment unit 15b uses the window ID to generate an operation sequence for each case (step S502). Third, the operation sequence for each case is classified into operation sequence types, and an operation sequence ID is assigned (step S503). At this time, the alignment unit 15b determines the classification into the operation sequence types by whether the operation sequence completely matches.

Fourth, the alignment unit 15b then performs multiple sequence alignment using the operation sequence for each operation sequence type (step S504). Here, in a case where progressive alignment which is one of the multiple sequence alignment methods is used, the alignment unit 15b creates a distance matrix of the operation sequence from the calculation of the sequence alignment of the operation sequence, creates a tree diagram from the distance matrix of the operation sequence, and aligns the operation sequence in the order of shortest distance on the tree diagram. Meanwhile, the alignment unit 15b may use a sequential improvement method, simulated annealing, or the like as methods other than the progressive alignment.

Fifth, the alignment unit 15b acquires the position ID (window) and window ID of the operation after alignment, and reflects them in the operation sequence for each case (step S505). Sixth, the alignment unit 15b uses the operation ID to generate an operation sequence for each case, for each position ID (window) (step S506). Seventh, the alignment unit 15b classifies the operation sequence for each case into operation sequence types (step S507). Eighth, multiple sequence alignment is performed using the operation sequence for each operation sequence type (step S508). Ninth, the alignment unit 15b acquires the position ID (window) and window ID of the operation after alignment, reflects them in the operation sequence for each case (step S509), and ends the process.

(2. Flow of visualization processing)

A flow of visualization processing will be described with reference to Fig. 36. Fig. 36 is a flowchart illustrating a flow of visualization processing related to the modification example of the embodiment. Meanwhile, the following steps S601 to S606 can also be executed in a different order. In addition, some of the following steps S601 to S606 will be omitted.

First, in a case where the threshold' is set (step S601: Yes), the visualization unit 15c sets the threshold', extracts only position IDs (windows), window IDs, position IDs (operations), and operation IDs that appear with the threshold' or more for all the cases (step S606), and proceeds to the process of step S602.

On the other hand, in a case where a threshold' is not set (step S601: No), the visualization unit 15c sets the threshold, and highlights and visualizes position IDs (windows) and window IDs that appear with the threshold or more for all the cases by lining up the window IDs on one axis in the order of the position IDs (windows) (step S602). At this time, the visualization unit 15c may change the color of the node to a conspicuous color or increase the size of the node as a method of highlighting the main flow. Subsequently, the visualization unit 15c visualizes the position IDs (windows) and window IDs that do not satisfy the threshold for all the cases on the visualization result visualized in the process of step S602, with these IDs shifted from one axis (step S603).

In addition, the visualization unit 15c sets a threshold, and highlights and visualizes the position IDs (operations) and operation IDs that appear with the threshold or more for all the cases for each position ID (window) by lining up the window IDs on one axis in the order of the position IDs (operations) within the position ID (window) (step S604). The position IDs (operations) and operation IDs that do not satisfy the threshold for all the cases for each position ID (window) are visualized within the position ID (window) on the visualization result visualized in the process of step S604, with these IDs shifted from one axis (step S605), and the process ends.

[Effects of modification example of embodiment]

First, the visualization display processing according to the present modification example described above includes further generating an operation sequence in units of windows arrayed in a time series order for each case and aligns the operation sequence in units of windows, specifying window operations that appear with a threshold or more at the same position in the operation sequence in units of windows of each case as windows of the main flow on the basis of the aligned operation sequence in units of windows, arranging nodes corresponding to the windows of the main flow in a time series order on one axis, arranging nodes corresponding to windows other than the windows of the main flow in a time series order at positions different from on the one axis, and superimposing and visualizing nodes corresponding to operations of each window. Therefore, in the present processing, the main flow and flows other than the main flow can be easily specified in business analysis without spending processing time, and screens and operation to be improved can be easily selected.

Second, the visualization display processing according to the present modification example described above includes further setting a reference value of windows to be visualized, arranging the nodes corresponding to the windows of the main flow in a time series order on one axis, among the nodes corresponding to windows that appear with the reference value or higher of the window, and arranging and visualizing the nodes corresponding to the windows other than the main flow in a time series order at positions different from on the one axis. Therefore, in the present processing, the main flow and flows other than the main flow desired to be visualized can be easily specified in business analysis without spending processing time, and screens and operation to be improved can be easily selected.

[System configuration etc.]

Each component of each device shown according to the above embodiment is functionally conceptual, and does not necessarily have to be physically configured as shown in the drawing. That is, the specific form of distribution and integration of each device not limited to that shown in the drawing, and all or part of them can be functionally or physically distributed and integrated in arbitrary units according to various loads and usage conditions. Further, All or any part of processing functions which are performed by each device can be realized by a CPU and a program analyzed and executed by the CPU, or realized as hardware using wired logic.

In addition, among the processes described in the above embodiment, all or part of the processes described as being performed automatically can be manually performed, or all or part of the processes described as being performed manually can also be performed automatically using known methods. In addition, information including processing procedures, control procedures, specific names, and various types of data and parameters shown in the above document and drawings can be arbitrarily changed unless otherwise specified.

[Program]

In addition, It is also possible to create a program in which the processing executed by the visualization display device 10 described in the above embodiment is described in a computer-executable language. In this case, the same effects as in the above embodiment can be obtained by a computer executing a program. Further, such a program may be recorded in a computer-readable recording medium, and the program recorded in this recording medium may be read and executed by a computer to realize the same processing as in the above embodiment.

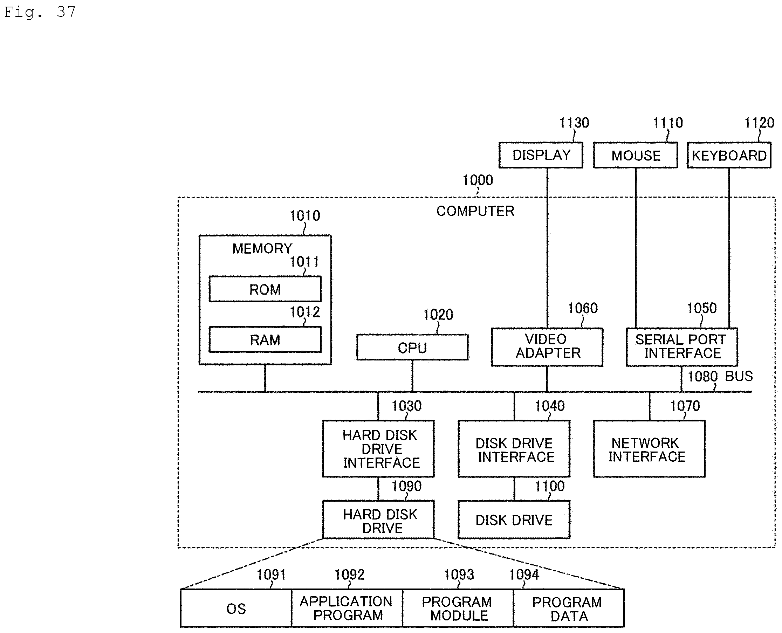

Fig. 37 is a diagram illustrating a computer that executes a program. As illustrated in Fig. 37, a computer 1000 includes, for example, a memory 1010, a CPU 1020, a hard disk drive interface 1030, a disk drive interface 1040, a serial port interface 1050, a video adapter 1060, and a network interface 1070, which are connected to each other through a bus 1080.

The memory 1010 includes a read only memory (ROM) 1011 and a RAM 1012 as illustrated in Fig. 37. The ROM 1011 stores a boot program such as, for example, a basic input output system (BIOS). The hard disk drive interface 1030 is connected to a hard disk drive 1090 as illustrated in Fig. 37. The disk drive interface 1040 is connected to a disk drive 1100 as illustrated in Fig. 37. A removable storage medium such as, for example, a magnetic disc or an optical disc is inserted into the disk drive 1100. The serial port interface 1050 is connected to, for example, a mouse 1110 and a keyboard 1120 as illustrated in Fig. 37. The video adapter 1060 is connected to, for example, a display 1130 as illustrated in Fig. 37.

Here, as illustrated in Fig. 37, the hard disk drive 1090 stores, for example, an OS 1091, an application program 1092, a program module 1093, and program data 1094. That is, the above program is stored in, for example, the hard disk drive 1090 as a program module describing instructions to be executed by the computer 1000.

In addition, various types of data described in the above embodiment are stored as program data in, for example, the memory 1010 or the hard disk drive 1090. The CPU 1020 reads out the program module 1093 or the program data 1094 stored in the memory 1010 or the hard disk drive 1090 to the RAM 1012 as necessary, and executes various processing procedures.

Meanwhile, the program module 1093 or the program data 1094 related to the program is not limited to being stored in the hard disk drive 1090, and may be stored in, for example, a removable storage medium and read out by the CPU 1020 through a disk drive or the like. Alternatively, the program module 1093 or the program data 1094 related to the program may be stored in another computer connected through a network (such as a local area network (LAN) or a wide area network (WAN)) and read out by the CPU 1020 through the network interface 1070.

The above-described embodiments and modifications thereof are included in the claims and their equivalents as well as in the technique disclosed by the present application.

[Reference Signs List]

    10 Visualization display device
    11 Input unit
    12 Output unit
    13 Communication unit
    14 Storage unit
    14a Operation log storage unit
    15 Control unit
    15a Acquisition unit
    15b Alignment unit
    15c Visualization unit

**Claims**

**1.** A visualization display device comprising:

    an acquisition unit configured to acquire an operation log;
    an alignment unit configured to generate an operation sequence in units of operations arrayed in a time series order for each case on the basis of the operation log and to align the operation sequence in units of operations; and
    a visualization unit configured to specify operation types that appear with a threshold or more at the same position in the operation sequence in units of operations of each case as operation types of a main flow on the basis of the aligned operation sequence in units of operations and to arrange and visualize nodes corresponding to the operation types of the main flow in a time series order on one axis.

**2.** The visualization display device according to claim 1, wherein the alignment unit specifies operations of the same type by extracting information on operation locations from the operation log, aligns the operation sequence in units of operations through pairwise alignment, generates a distance matrix for each operation sequence in units of operations, generates a distance vector using the distance matrix, and further aligns the operation sequence through multiple sequence alignment in the order of the operation sequence in units of operations having the smaller distance vector.

**3.** The visualization display device according to claim 1 or 2, wherein the visualization unit further sets a reference value of an operation to be visualized, arranges the nodes corresponding to the operation types of the main flow in a time series order on the one axis, among nodes corresponding to operation types that appear with the reference value or higher of the operation, and arranges and visualizes nodes corresponding to operation types other than the operation types of the main flow in a time series order at positions different from on the one axis.

**4.** The visualization display device according to any one of claims 1 to 3, wherein the alignment unit further generates an operation sequence in units of windows arrayed in a time series order for each case and aligns the operation sequence in units of windows, and
    the visualization unit specifies windows that appear with a threshold or more at the same position in the operation sequence in units of windows of each case as windows of the main flow on the basis of the aligned operation sequence in units of windows, arranges nodes corresponding to the windows of the main flow in a time series order on one axis, arranges nodes corresponding to windows other than the windows of the main flow in a time series order at positions different from on the one axis, and superimposes and visualizes nodes corresponding to operations of each window.

5. The visualization display device according to claim 4, wherein the visualization unit further sets a reference value of a window to be visualized, arranges nodes corresponding to the windows of the main flow in a time series order on one axis, among nodes corresponding to windows that appear with the reference value or higher of the window, and arranges and visualizes nodes corresponding to windows other than the windows of the main flow in a time series order at positions different from on the one axis.

6. A visualization display method which is executed by a visualization display device, the method comprising:

an acquisition step of acquiring an operation log;
an alignment step of generating an operation sequence in units of operations arrayed in a time series order for each case on the basis of the operation log and aligning the operation sequence in units of operations; and
a visualization step of specifying operation types that appear with a threshold or more at the same position in the operation sequence in units of operations of each case as operation types of a main flow on the basis of the aligned operation sequence in units of operations and arranging and visualizing nodes corresponding to the operation types of the main flow in a time series order on one axis.

7. A visualization display program causing a computer to execute:

an acquisition step of acquiring an operation log;
an alignment step of generating an operation sequence in units of operations arrayed in a time series order for each case on the basis of the operation log and aligning the operation sequence in units of operations; and
a visualization step of specifying operation types that appear with a threshold or more at the same position in the operation sequence in units of operations of each case as operation types of a main flow on the basis of the aligned operation sequence in units of operations and arranging and visualizing nodes corresponding to the operation types of the main flow in a time series order on one axis.

Fig. 1

VISUALIZATION
DISPLAY DEVICE ⟨10

CONTROL UNIT ⟨15          STORAGE UNIT ⟨14

INPUT UNIT ⟨11

ACQUISITION
UNIT ⟨15a

OPERATION
LOG
STORAGE UNIT ⟨14a

OUTPUT
UNIT ⟨12

ALIGNMENT UNIT ⟨15b

COMMUNICATION
UNIT ⟨13

VISUALIZATION
UNIT ⟨15c

Fig. 2

| OPERATION TIME | CASE ID | OPERATION LOCATION (WINDOW INFORMATION) | OPERATION LOCATION (GUI COMPONENT NAME, PRODUCTION MARK, ETC.) | INPUT VALUE |
|---|---|---|---|---|
| 2018/9/25 10:15:23 | CASE 1 | WINDOW A | OPERATION a | DENDENTARO CO., LTD. |
| 2018/9/25 10:19:10 | CASE 1 | WINDOW A | OPERATION b | YOKOSUKA CITY, KANAGAWA PREFECTURE |
| 2018/9/25 10:22:08 | CASE 1 | WINDOW B | OPERATION c | SERVICE A |
| 2018/9/25 10:24:48 | CASE 1 | WINDOW B | OPERATION d | OPTION 1 |
| 2018/9/25 10:29:01 | CASE 1 | WINDOW B | OPERATION e | REGISTRATION |
| 2018/9/25 13:42:25 | CASE 2 | WINDOW A | OPERATION a | DENDEN HANAKO |
| 2018/9/25 13:44:10 | CASE 2 | WINDOW A | OPERATION f | 001-1111-2222 |
| 2018/9/25 13:49:12 | CASE 2 | WINDOW A | OPERATION b | YOKOHAMA CITY, KANAGAWA PREFECTURE |
| 2018/9/25 13:52:12 | CASE 2 | WINDOW B | OPERATION c | SERVICE A |
| 2018/9/25 13:56:25 | CASE 2 | WINDOW B | OPERATION d | OPTION 1 |

EP 4 343 555 A1

Fig. 3

| OPERATION TIME | CASE ID | OPERATION LOCATION (WINDOW INFORMATION) | OPERATION LOCATION (GUI COMPONENT NAME, PRODUCTION MARK, ETC.) | INPUT VALUE | OPERATION ID |
|---|---|---|---|---|---|
| t1 | CASE 1 | WINDOW A | OPERATION a | DENDEN TARO | 0 |
| t2 | CASE 1 | WINDOW A | OPERATION b | YOKOSUKA, KANAGAWA | 1 |
| t3 | CASE 1 | WINDOW A | OPERATION b | YOKOSUKA CITY, KANAGAWA | 1 |
| t4 | CASE 1 | WINDOW A | OPERATION a | DENDENTARO CO., LTD. | 0 |
| t5 | CASE 1 | WINDOW B | OPERATION c | SERVICE A | 2 |
| t6 | CASE 1 | WINDOW B | OPERATION d | OPTION 2 | 3 |
| t7 | CASE 1 | WINDOW B | OPERATION d | OPTION 1 | 3 |
| ... | ... | ... | ... | ... | ... |
| t'1 | CASE 2 | WINDOW A | OPERATION a | DENDEN HANAKO | 0 |
| t'2 | CASE 2 | WINDOW A | OPERATION b | YOKOSUKA CITY, KANAGAWA | 1 |
| t'3 | CASE 2 | WINDOW A | OPERATION a | DENDEN HANAKO | 0 |
| t'4 | CASE 2 | WINDOW B | OPERATION c | SERVICE A | 2 |
| t'5 | CASE 2 | WINDOW A | OPERATION h | SEARCH | 8 |
| t'6 | CASE 2 | WINDOW B | OPERATION d | OPTION 1 | 3 |
| ... | ... | ... | ... | ... | ... |

| OPERATION ID | OPERATION CONTENT |
|---|---|
| 0 | WINDOW A + OPERATION a |
| 1 | WINDOW A + OPERATION b |
| 2 | WINDOW B + OPERATION c |
| 3 | WINDOW B + OPERATION d |
| ... | ... |
| 8 | WINDOW A + OPERATION h |

EP 4 343 555 A1

Fig. 4

Fig. 5

CASE 1 ⟨0⟩⟨1⟩⟨1⟩⟨0⟩⟨2⟩⟨8⟩⟨3⟩⟨4⟩⟨5⟩⟨3⟩⟨6⟩⟨7⟩⟨3⟩⟨0⟩⟨1⟩⟨1⟩⟨0⟩⟨2⟩⟨8⟩⟨3⟩⟨4⟩⟨5⟩⟨3⟩⟨3⟩⟨3⟩⟨6⟩⟨7⟩⟨2⟩⟨9⟩⟨2⟩⟨10⟩⟨11⟩⟨12⟩⟨13⟩⟨2⟩⟨14⟩⟨15⟩⟨2⟩⟩

CASE 2 ⟨0⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨16⟩⟨11⟩⟨12⟩⟨17⟩⟨2⟩⟩

CASE 3 ⟨0⟩⟨1⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨16⟩⟨11⟩⟨12⟩⟩

CASE 4 ⟨0⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨11⟩⟨12⟩⟨16⟩⟩

CASE 5 ⟨0⟩⟨1⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨6⟩⟨7⟩⟨2⟩⟨9⟩⟨2⟩⟨10⟩⟨16⟩⟨11⟩⟨12⟩⟨17⟩⟨18⟩⟩

CASE 6 ⟨0⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨16⟩⟨11⟩⟨12⟩⟨17⟩⟨2⟩⟩

CASE 7 ⟨0⟩⟨1⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨16⟩⟨11⟩⟨12⟩⟩

CASE 8 ⟨0⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨11⟩⟨12⟩⟨16⟩⟩

CASE 9 ⟨0⟩⟨1⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨6⟩⟨7⟩⟨3⟩⟨2⟩⟨9⟩⟨2⟩⟨10⟩⟨16⟩⟨11⟩⟨12⟩⟨17⟩⟨18⟩⟩

CASE 10 ⟨0⟩⟨1⟩⟨0⟩⟨2⟩⟨8⟩⟨3⟩⟨4⟩⟨4⟩⟨5⟩⟨3⟩⟨6⟩⟨7⟩⟨3⟩⟨2⟩⟨9⟩⟨2⟩⟨10⟩⟨11⟩⟨12⟩⟨16⟩⟩

⟨⟩ OPERATION ID

| OPERATION SEQUENCE ID | CASE ID |
|---|---|
| OPERATION SEQUENCE 1 | CASE 1 |
| OPERATION SEQUENCE 2 | CASE 2, CASE 6 |
| OPERATION SEQUENCE 3 | CASE 3, CASE 7 |
| OPERATION SEQUENCE 4 | CASE 4, CASE 8, CASE 10 |
| OPERATION SEQUENCE 5 | CASE 5, CASE 9 |

EP 4 343 555 A1

Fig. 6

| | OPERATION SEQUENCE 1 | OPERATION SEQUENCE 2 | OPERATION SEQUENCE 3 | OPERATION SEQUENCE 4 | OPERATION SEQUENCE 5 |
|---|---|---|---|---|---|
| OPERATION SEQUENCE 1 | 0 | 24 | 22 | 24 | 23 |
| OPERATION SEQUENCE 2 | 24 | 0 | 4 | 4 | 9 |
| OPERATION SEQUENCE 3 | 22 | 4 | 0 | 4 | 7 |
| OPERATION SEQUENCE 4 | 24 | 4 | 4 | 0 | 11 |
| OPERATION SEQUENCE 5 | 23 | 9 | 7 | 11 | 0 |

Fig. 7

EP 4 343 555 A1

OPERATION SEQUENCE 2

OPERATION SEQUENCE 4

Fig. 8

|  | OPERATION SEQUENCE 1 | OPERATION SEQUENCE 2 | OPERATION SEQUENCE 3 | OPERATION SEQUENCE 4 | OPERATION SEQUENCE 5 |
|---|---|---|---|---|---|
| OPERATION SEQUENCE 1 | 0 | 24 | 22 | 24 | 23 |
| OPERATION SEQUENCE 2 | 24 | 0 | 4 | 4 | 9 |
| OPERATION SEQUENCE 3 | 22 | 4 | 0 | 4 | 7 |
| OPERATION SEQUENCE 4 | 24 | 4 | 4 | 0 | 11 |
| OPERATION SEQUENCE 5 | 23 | 9 | 7 | 11 | 0 |

(1)

VECTOR OF OPERATION SEQUENCE 1 =
[0, 24, 22, 24, 23]
VECTOR OF OPERATION SEQUENCE 2 =
[24, 0, 4, 4, 9]

(2)

TREE DIAGRAM

Fig. 9

Fig. 10

| POSITION ID | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| CASE 1 | 0 | 1 | 1 | 0 | 2 | 3 | – | 3 | – | 4 | 5 | 3 | 6 | 7 | 3 | 0 | 1 | 1 | 0 | 2 | 8 | 3 | 4 | 5 | 3 | 3 | – | – | 3 | 6 | 7 | 2 | 9 | 2 | 10 | – | 11 | 12 | 13 | 2 | 14 | 15 | – | – | 2 | – |
| CASE 2 | 0 | – | 1 | 0 | 2 | – | 8 | 3 | 4 | 4 | 5 | – | – | – | – | – | – | – | – | – | – | – | – | – | 3 | 6 | 7 | 3 | – | – | 2 | 9 | 2 | 10 | 16 | 11 | 12 | – | – | – | – | 17 | – | – | 2 | – |
| CASE 3 | 0 | 1 | 1 | 0 | 2 | – | 8 | 3 | – | 4 | 5 | – | – | – | – | – | – | – | – | – | – | – | – | – | 3 | 6 | 7 | 3 | – | – | 2 | 9 | 2 | 10 | 16 | 11 | 12 | – | – | – | – | – | – | – | – | – |
| CASE 4 | 0 | – | 1 | 0 | 2 | – | 8 | 3 | 4 | 4 | 5 | – | – | – | – | – | – | – | – | – | – | – | – | – | 3 | 6 | 7 | 3 | – | – | 2 | 9 | 2 | 10 | – | 11 | 12 | – | – | – | – | – | – | – | – | 16 |
| CASE 5 | 0 | 1 | 1 | 0 | 2 | – | 8 | 3 | – | 4 | 5 | 3 | 6 | 7 | – | – | – | – | – | – | – | – | – | – | 3 | 6 | 7 | 3 | 6 | 7 | 2 | 9 | 2 | 10 | 16 | 11 | 12 | – | – | – | – | 17 | 18 | – | – | – |
| CASE 6 | 0 | – | 1 | 0 | 2 | – | 8 | 3 | 4 | 4 | 5 | – | – | – | – | – | – | – | – | – | – | – | – | – | 3 | 6 | 7 | 3 | – | – | 2 | 9 | 2 | 10 | 16 | 11 | 12 | – | – | – | – | 17 | – | – | 2 | – |
| CASE 7 | 0 | 1 | 1 | 0 | 2 | – | 8 | 3 | – | 4 | 5 | – | – | – | – | – | – | – | – | – | – | – | – | – | 3 | 6 | 7 | 3 | – | – | 2 | 9 | 2 | 10 | 16 | 11 | 12 | – | – | – | – | – | – | – | – | – |
| CASE 8 | 0 | – | 1 | 0 | 2 | – | 8 | 3 | 4 | 4 | 5 | – | – | – | – | – | – | – | – | – | – | – | – | – | 3 | 6 | 7 | 3 | – | – | 2 | 9 | 2 | 10 | – | 11 | 12 | – | – | – | – | – | – | – | – | 16 |
| CASE 9 | 0 | 1 | 1 | 0 | 2 | – | 8 | 3 | – | 4 | 5 | 3 | 6 | 7 | – | – | – | – | – | – | – | – | – | – | 3 | 6 | 7 | 3 | 6 | 7 | 2 | 9 | 2 | 10 | 16 | 11 | 12 | – | – | – | – | 17 | 18 | – | – | – |
| CASE 10 | 0 | – | 1 | 0 | 2 | – | 8 | 3 | 4 | 4 | 5 | – | – | – | – | – | – | – | – | – | – | – | – | – | 3 | 6 | 7 | 3 | – | – | 2 | 9 | 2 | 10 | – | 11 | 12 | – | – | – | – | – | – | – | – | 16 |

Fig. 11

OPERATION ID

x AXIS

y AXIS

START

END

Fig. 12

Fig. 13

x AXIS

x AXIS

x AXIS

EP 4 343 555 A1

Fig. 14

```
                 ┌─────────────┐
                 │    START    │
                 └──────┬──────┘
                        │              ⌡S101
  ┌─────────────────────▼─────────────────────┐
  │   OPERATION LOG ACQUISITION PROCESSING     │
  └─────────────────────┬─────────────────────┘
                        │              ⌡S102
  ┌─────────────────────▼─────────────────────┐
  │           ALIGNMENT PROCESSING             │
  └─────────────────────┬─────────────────────┘
                        │              ⌡S103
  ┌─────────────────────▼─────────────────────┐
  │          VISUALIZATION PROCESSING          │
  └─────────────────────┬─────────────────────┘
                        │
                 ┌──────▼──────┐
                 │     END     │
                 └─────────────┘
```

Fig. 15

```
                        ┌─────────────┐
                        │    START    │
                        └─────────────┘
                               │
                               ▼
                   ╱───────────────────────╲         ⌐S201
        ┌─────────╱      DID USER            ╲──────────────── Yes
        │         ╲ STOP PROCESSING OR       ╱
        │          ╲ DROP PC TERMINAL?      ╱
        │           ╲───────────────────────╱
        │                    │ No                    ⌐S202
        │          ┌──────────────────────────────┐
        │          │     ACQUIRE OPERATION LOG     │
        │          └──────────────────────────────┘
        │                    │                      ⌐S203
        │          ┌──────────────────────────────┐
        │          │   ACCUMULATE OPERATION LOG    │
        │          └──────────────────────────────┘
        │                    │
        └────────────────────┘
                               
                        ┌─────────────┐
                        │     END     │
                        └─────────────┘
```

Fig. 16

START

S301
ASSIGN OPERATION ID

S302
GENERATE OPERATION SEQUENCE FOR EACH CASE

S303
CLASSIFY OPERATION SEQUENCES FOR EACH
CASE INTO OPERATION SEQUENCE TYPES

S304
EXECUTE MULTIPLE SEQUENCE ALIGNMENT

S305
ACQUIRE POSITION ID AND OPERATION ID OF
OPERATION AFTER ALIGNMENT AND REFLECT
THEM IN OPERATION SEQUENCE FOR EACH CASE

END

Fig. 17

```
        ┌──────────────┐
        │    START     │
        └──────┬───────┘
               │
               ▼          S401
        ╱────────────────╲      Yes
       ╱  SET THRESHOLD'?  ╲──────────────────────┐
       ╲                  ╱                        │
        ╲────────────────╱                         ▼          S404
               │ No              ┌────────────────────────────────┐
               │                 │ EXTRACT ONLY POSITION ID AND    │
               │                 │ OPERATION ID THAT APPEAR        │
               │                 │ WITH THRESHOLD' OR MORE         │
               │                 └────────────────┬───────────────┘
               │◄─────────────────────────────────┘
               ▼          S402
        ┌──────────────────────┐
        │ VISUALIZE OPERATIONS OF │
        │ MAIN FLOW ON ONE AXIS   │
        └──────┬───────────────┘
               ▼          S403
        ┌──────────────────────┐
        │ VISUALIZE OPERATIONS   │
        │ OTHER THAN MAIN FLOW    │
        └──────┬───────────────┘
               ▼
        ┌──────────────┐
        │     END      │
        └──────────────┘
```

Fig. 18

| OPERATION TIME | CASE ID | OPERATION LOCATION (WINDOW INFORMATION) | OPERATION LOCATION (GUI COMPONENT NAME, COORDINATES, ETC.) | INPUT VALUE |
|---|---|---|---|---|
| t1 | CASE 1 | WINDOW A | OPERATION a | DENDEN TARO |
| t2 | CASE 1 | WINDOW A | OPERATION b | YOKOSUKA, KANAGAWA |
| t3 | CASE 1 | WINDOW B | OPERATION c | YOKOSUKA CITY, KANAGAWA |
| t4 | CASE 1 | WINDOW B | OPERATION d | DENDENTARO CO., LTD. |
| t5 | CASE 1 | WINDOW C | OPERATION e | SERVICE A |
| t6 | CASE 1 | WINDOW C | OPERATION f | OPTION 2 |
| t7 | CASE 1 | WINDOW C | OPERATION f | OPTION 1 |
| ... | ... | ... | ... | ... |
| t'1 | CASE 2 | WINDOW A | OPERATION a | DENDEN HANAKO |
| t'2 | CASE 2 | WINDOW A | OPERATION b | YOKOSUKA CITY, KANAGAWA |
| t'3 | CASE 2 | WINDOW B | OPERATION c | DENDEN HANAKO |
| t'4 | CASE 2 | WINDOW B | OPERATION d | SERVICE A |
| t'5 | CASE 2 | WINDOW C | OPERATION e | SEARCH |
| t'6 | CASE 2 | WINDOW C | OPERATION f | OPTION 1 |
| ... | ... | ... | ... | ... |

Fig. 19

| OPERATION TIME | CASE ID | OPERATION LOCATION (WINDOW INFORMATION) | OPERATION LOCATION (GUI COMPONENT NAME, COORDINATES, ETC.) | INPUT VALUE | WINDOW ID | OPERATION ID |
|---|---|---|---|---|---|---|
| t1 | CASE 1 | WINDOW A | OPERATION a | DENDEN TARO | A | 0 |
| t2 | CASE 1 | WINDOW A | OPERATION b | YOKOSUKA, KANAGAWA | A | 1 |
| t3 | CASE 1 | WINDOW C | OPERATION c | YOKOSUKA CITY, KANAGAWA | C | 2 |
| t4 | CASE 1 | WINDOW C | OPERATION d | DENDENTARO CO., LTD. | C | 3 |
| t5 | CASE 1 | WINDOW B | OPERATION e | SERVICE A | B | 4 |
| t6 | CASE 1 | WINDOW B | OPERATION f | OPTION 2 | B | 5 |
| t7 | CASE 1 | WINDOW B | OPERATION f | OPTION 1 | B | 5 |
| ... | ... | ... | ... | ... | ... | ... |
| t'1 | CASE 2 | WINDOW A | OPERATION a | DENDEN HANAKO | A | 0 |
| t'2 | CASE 2 | WINDOW A | OPERATION b | YOKOSUKA CITY, KANAGAWA | A | 1 |
| t'3 | CASE 2 | WINDOW C | OPERATION c | DENDEN HANAKO | C | 2 |
| t'4 | CASE 2 | WINDOW C | OPERATION d | SERVICE A | C | 3 |
| t'5 | CASE 2 | WINDOW B | OPERATION e | SEARCH | B | 4 |
| t'6 | CASE 2 | WINDOW B | OPERATION f | OPTION 1 | B | 5 |
| ... | ... | ... | ... | ... | ... | ... |

(1)

| WINDOW ID | OPERATION CONTENT |
|---|---|
| A | WINDOW A |
| B | WINDOW B |
| C | WINDOW C |

(2)

| OPERATION ID | OPERATION CONTENT |
|---|---|
| 0 | WINDOW A + OPERATION a |
| 1 | WINDOW A + OPERATION b |
| 2 | WINDOW C + OPERATION c |
| 3 | WINDOW C + OPERATION d |
| 4 | WINDOW B + OPERATION e |
| 5 | WINDOW B + OPERATION f |

Fig. 20

| CASE | | | | | | | | |
|---|---|---|---|---|---|---|---|---|
| CASE 1 | WINDOW ID | A | C | B | D | E | A | |
| | OPERATION ID | 0,1 | 4,5,6 | 2,3,7,8,9,10,2 | 11,12,13,14 | 15,16,17,18,19,20,21,22,17,23 | 0 | |
| CASE 2 | WINDOW ID | A | C | B | D | E | A | |
| | OPERATION ID | 0,1 | 4,5,24,25 | 2,3,7,8,9,10 | 11,12,14,13 | 15,16,26,18,21,22,17,23 | 0 | |
| CASE 3 | WINDOW ID | E | A | C | B | D | A | |
| | OPERATION ID | 15,26,16,18,21,22,19,20,17 | 0,1 | 4,28,5,27,25 | 2,3,7,8,2,9,10 | 11,12,13,14,13,29 | 0 | |
| CASE 4 | WINDOW ID | E | A | C | B | D | E | A |
| | OPERATION ID | 15,16,26,19,20,18,21,22,17,23,30,23 | 0,1 | 4,5,31,25 | 2,3,7,8,9,10,32 | 14,12,13,14 | 23,15,23,33,17,23 | 0 |
| CASE 5 | WINDOW ID | E | A | C | B | D | E | A |
| | OPERATION ID | 15,16,26,20,18,21,22,17 | 0,1,0 | 4,5,34,25 | 2,3,7,8,9,10 | 11,12,14,13,29 | 23 | 0 |
| CASE 6 | WINDOW ID | A | C | B | D | E | | |
| | OPERATION ID | 0,1,0 | 4,5,35,25 | 2,3,7,8,9,10 | 11,14,12,13 | 15,16,17,18,21,19,20,22,17,23,23 | | |
| CASE 7 | WINDOW ID | E | A | C | B | D | A | |
| | OPERATION ID | 15,26,16,18,21,22,19,20,17 | 0,1 | 4,28,5,27,25 | 2,3,7,8,2,9,10 | 11,12,13,14,13,29 | 0 | |
| CASE 8 | WINDOW ID | E | A | C | B | D | E | A |
| | OPERATION ID | 15,16,26,19,20,18,21,22,17,23,30,23 | 0,1 | 4,5,31,25 | 2,3,7,8,9,10,32 | 14,12,13,14 | 23,15,23,33,17,23 | 0, |

Fig. 21

Fig. 22

| CASE 1 | A | C | B | D | E | A | |
| CASE 2 | A | C | B | D | E | A | |
| CASE 3 | E | A | C | B | D | A | |
| CASE 4 | E | A | C | B | D | E | A |
| CASE 5 | E | A | C | B | D | E | A |
| CASE 6 | A | C | B | D | E | | |
| CASE 7 | E | A | C | B | D | A | |
| CASE 8 | E | A | C | B | D | E | A |

WINDOW ID

| OPERATION SEQUENCE ID | CASE ID |
| --- | --- |
| OPERATION SEQUENCE 1 | CASE 1, CASE 2 |
| OPERATION SEQUENCE 2 | CASE 3, CASE 7 |
| OPERATION SEQUENCE 3 | CASE 4, CASE 5, CASE 8 |
| OPERATION SEQUENCE 4 | CASE 6 |

EP 4 343 555 A1

Fig. 23

| | OPERATION SEQUENCE 1 | OPERATION SEQUENCE 2 | OPERATION SEQUENCE 3 | OPERATION SEQUENCE 4 |
|---|---|---|---|---|
| OPERATION SEQUENCE 1 | 0 | 2 | 1 | 1 |
| OPERATION SEQUENCE 2 | 2 | 0 | 1 | 3 |
| OPERATION SEQUENCE 3 | 1 | 1 | 0 | 2 |
| OPERATION SEQUENCE 4 | 1 | 3 | 2 | 0 |

Fig. 24

Fig. 25

| | WINDOW ID | A | C | B | D | E | A |
|---|---|---|---|---|---|---|---|
| OPERATION SEQUENCE 1 | OPERATION ID | 0,1 | 4,5,6 | 2,3,7,8,9,10,2 | 11,12,13,14 | 15,16,17,18,19,20,21,22,17,23 | 0 |

| | WINDOW ID | E | A | C | B | D | E | A |
|---|---|---|---|---|---|---|---|---|
| OPERATION SEQUENCE 2 | OPERATION ID | 15,16,26,19,20,18,21,22,17,23,30,23 | 0,1 | 4,5,31,25 | 2,3,7,8,9,10,32 | 14,12,13,14 | 23,15,23,33,17,23 | 0 |

OPERATION SEQUENCE 2

| | | 0. | 1. | 2. | 3. | 4. | 5. | 6. | 7. |
|---|---|---|---|---|---|---|---|---|---|
| | | - | E | A | C | B | D | E | A |
| 0. | - | 0 | 0 | 0 | 0 | 0 | 0 | 0 | 0 |
| 1. | E | 0 | 0.5 | 0 | 0 | 0 | 0 | 0 | 0 |
| 2. | A | 0 | 0 | 0.7 | 0.7 | 0.7 | 0.7 | 0.7 | 0.7 |
| 3. | C | 0 | 0 | 0.7 | 1.1 | 1.1 | 1.1 | 1.1 | 1.1 |
| 4. | B | 0 | 0 | 0.7 | 1.1 | 1.9 | 1.9 | 1.9 | 1.9 |
| 5. | D | 0 | 0 | 0.7 | 1.1 | 1.9 | 2.5 | 2.5 | 2.5 |
| 6. | E | 0 | 0.5 | 0.7 | 1.1 | 1.9 | 2.5 | 2.7 | 2.7 |
| | A | 0 | 0.5 | 0.7 | 1.1 | 1.9 | 2.5 | 2.7 | 3 |

OPERATION SEQUENCE 1

Fig. 26

|  | OPERATION SEQUENCE 1 | OPERATION SEQUENCE 2 | OPERATION SEQUENCE 3 | OPERATION SEQUENCE 4 |
|---|---|---|---|---|
| OPERATION SEQUENCE 1 | 0 | 2 | 1 | 1 |
| OPERATION SEQUENCE 2 | 2 | 0 | 1 | 3 |
| OPERATION SEQUENCE 3 | 1 | 1 | 0 | 2 |
| OPERATION SEQUENCE 4 | 1 | 3 | 2 | 0 |

(1)

VECTOR OF OPERATION SEQUENCE 1 = [0, 2, 1, 1]
VECTOR OF OPERATION SEQUENCE 2 = [2, 0, 1, 3]

(2)

TREE DIAGRAM

Fig. 27

Fig. 28

| | | | | | | | | |
OPERATION SEQUENCE 1: – A C B D E A

OPERATION SEQUENCE 3: E A C B D E A

OPERATION SEQUENCE 2: E A C B D – A

OPERATION SEQUENCE 4: – A C B D E –

WINDOW ID

| POSITION ID (WINDOW) | 1 | 2 | 3 | 4 | 5 | 6 | 7 |
|---|---|---|---|---|---|---|---|
| CASE 1 | – | A | C | B | D | E | A |
| CASE 2 | – | A | C | B | D | E | A |
| CASE 3 | E | A | C | B | D | – | A |
| CASE 4 | E | A | C | B | D | E | A |
| CASE 5 | E | A | C | B | D | E | A |
| CASE 6 | – | A | C | B | D | E | – |
| CASE 7 | E | A | C | B | D | – | A |
| CASE 8 | E | A | C | B | D | E | A |

Fig. 29

| OPERATION TIME | CASE ID | OPERATION LOCATION (WINDOW INFORMATION) | OPERATION LOCATION (GUI COMPONENT NAME, COORDINATES, ETC.) | INPUT VALUE | WINDOW ID | OPERATION ID | POSITION ID (WINDOW) |
|---|---|---|---|---|---|---|---|
| t1 | CASE 1 | WINDOW A | OPERATION a | DENDEN TARO | A | 0 | 2 |
| t2 | CASE 1 | WINDOW A | OPERATION b | YOKOSUKA, KANAGAWA | A | 1 | 2 |
| t3 | CASE 1 | WINDOW C | OPERATION c | YOKOSUKA CITY, KANAGAWA | C | 2 | 3 |
| t4 | CASE 1 | WINDOW C | OPERATION d | DENDENTARO CO., LTD. | C | 3 | 3 |
| t5 | CASE 1 | WINDOW B | OPERATION e | SERVICE A | B | 4 | 4 |
| t6 | CASE 1 | WINDOW B | OPERATION f | OPTION 2 | B | 5 | 4 |
| t7 | CASE 1 | WINDOW B | OPERATION f | OPTION 1 | B | 5 | 4 |
| ... | ... | ... | ... | ... | ... | ... | ... |
| t'1 | CASE 2 | WINDOW A | OPERATION a | DENDEN HANAKO | A | 0 | 2 |
| t'2 | CASE 2 | WINDOW A | OPERATION b | YOKOSUKA CITY, KANAGAWA | A | 1 | 2 |
| t'3 | CASE 2 | WINDOW C | OPERATION c | DENDEN HANAKO | C | 2 | 3 |
| t'4 | CASE 2 | WINDOW C | OPERATION d | SERVICE A | C | 3 | 3 |
| t'5 | CASE 2 | WINDOW B | OPERATION e | SEARCH | B | 4 | 4 |
| t'6 | CASE 2 | WINDOW B | OPERATION f | OPTION 1 | B | 5 | 4 |
| ... | ... | ... | ... | ... | ... | ... | ... |

EP 4 343 555 A1

Fig. 30

Fig. 31

| POSITION ID (OPERATION) | 1 | 2 | 3 | 5 | 6 | 7 | 8 | 9 | 10 |
|---|---|---|---|---|---|---|---|---|---|
| CASE 1 | 2 | 3 | 7 | 8 | – | 9 | 10 | 2 | – |
| CASE 2 | 2 | 3 | 7 | 8 | – | 9 | 10 | – | – |
| CASE 3 | 2 | 3 | 7 | 8 | 2 | 9 | 10 | – | – |
| CASE 4 | 2 | 3 | 7 | 8 | – | 9 | 10 | – | 32 |
| CASE 5 | 2 | 3 | 7 | 8 | – | 9 | 10 | – | – |
| CASE 6 | 2 | 3 | 7 | 8 | – | 9 | 10 | – | – |
| CASE 7 | 2 | 3 | 7 | 8 | 2 | 9 | 10 | – | – |
| CASE 8 | 2 | 3 | 7 | 8 | – | 9 | 10 | – | 32 |

Fig. 32

| CASE | | | A | C | B | D | E | A |
|---|---|---|---|---|---|---|---|---|
| 1 | WINDOW ID | | A | C | B | D | E | A |
| | OPERATION ID | − | 0,1,− | 4,−,5,−,6,−,−,−,−,− | 2,3,7,8,−,9,10,2,− | 11,−,12,13,14,−,− | −,15,16,−,17,18,−,19,20,21,22,17,−,−,−,23 | 0 |
| 2 | WINDOW ID | − | A | C | B | D | E | A |
| | OPERATION ID | − | 0,1,− | 4,−,5,−,−,−,−,24,−,25 | 2,3,7,8,−,9,10,−,− | 11,−,12,−,14,13,− | −,15,16,26,−,18,−,−,−,21,22,17,−,−,−,23 | 0 |
| 3 | WINDOW ID | E | A | C | B | D | − | A |
| | OPERATION ID | 15,26,16,−,−,−,18,21,22,19,20,17,−,−,− | 0,1,− | 4,28,5,27,−,−,−,−,−,25 | 2,3,7,8,2,9,10,−,− | 11,−,12,13,14,13,29 | − | 0 |
| 4 | WINDOW ID | E | A | C | B | D | E | A |
| | OPERATION ID | 15,−,16,26,19,20,18,21,22,−,−,17,23,30,23 | 0,1,− | 4,−,5,−,−,−,−,−,31,25 | 2,3,7,8,−,9,10,−,32 | −,14,12,13,14,−,− | 23,15,−,−,−,−,−,−,−,−,−,−,−,23,33,17,23 | 0 |
| 5 | WINDOW ID | E | A | C | B | D | E | A |
| | OPERATION ID | 15,−,16,26,−,20,18,21,22,−,−,17,−,−,− | 0,1,0 | 4,−,5,−,−,−,34,−,−,25 | 2,3,7,8,−,9,10,−,− | 11,−,12,−,14,13,29 | −,−,−,−,−,−,−,−,−,−,−,−,−,−,−,−,23 | 0 |
| 6 | WINDOW ID | − | A | C | B | D | E | − |
| | OPERATION ID | − | 0,1,0 | 4,−,5,−,−,35,−,−,−,25 | 2,3,7,8,−,9,10,−,− | 11,14,12,13,−,−,− | −,15,16,−,17,18,21,19,20,−,22,17,23,−,−,23 | − |
| 7 | WINDOW ID | E | A | C | B | D | − | A |
| | OPERATION ID | 15,26,16,−,−,−,18,21,22,19,20,17,−,−,− | 0,1,− | 4,28,5,27,−,−,−,−,−,25 | 2,3,7,8,2,9,10,−,− | 11,−,12,13,14,13,29 | − | 0 |
| 8 | WINDOW ID | E | A | C | B | D | E | A |
| | OPERATION ID | 15,−,16,26,19,20,18,21,22,−,−,17,23,30,23 | 0,1,− | 4,−,5,−,−,−,−,−,31,25 | 2,3,7,8,−,9,10,−,32 | −,14,12,13,14,−,− | 23,15,−,−,−,−,−,−,−,−,−,−,−,23,33,17,23 | 0 |

Fig. 33

Fig. 34

Fig. 35

```
           ┌──────────┐
           │  START   │
           └────┬─────┘
                │              ⌐S501
     ┌──────────┴──────────────┐
     │     ASSIGN WINDOW ID     │
     └──────────┬──────────────┘
                │              ⌐S502
     ┌──────────┴──────────────────────┐
     │ GENERATE OPERATION SEQUENCE FOR  │
     │          EACH CASE               │
     └──────────┬──────────────────────┘
                │              ⌐S503
     ┌──────────┴──────────────────────┐
     │ CLASSIFY OPERATION SEQUENCES FOR │
     │ EACH CASE INTO OPERATION         │
     │ SEQUENCE TYPES                   │
     └──────────┬──────────────────────┘
                │              ⌐S504
     ┌──────────┴──────────────────────┐
     │ EXECUTE MULTIPLE SEQUENCE        │
     │          ALIGNMENT               │
     └──────────┬──────────────────────┘
                │              ⌐S505
     ┌──────────┴──────────────────────┐
     │ ACQUIRE POSITION ID (WINDOW) AND │
     │ WINDOW ID OF OPERATION AFTER     │
     │ ALIGNMENT AND REFLECT THEM IN    │
     │ OPERATION SEQUENCE FOR EACH CASE │
     └──────────┬──────────────────────┘
                │              ⌐S506
     ┌──────────┴──────────────────────┐
     │ GENERATE OPERATION SEQUENCE FOR  │
     │ EACH CASE USING OPERATION ID FOR │
     │ EACH POSITION ID (WINDOW)        │
     └──────────┬──────────────────────┘
                │              ⌐S507
     ┌──────────┴──────────────────────┐
     │ CLASSIFY OPERATION SEQUENCES FOR │
     │ EACH CASE INTO OPERATION         │
     │ SEQUENCE TYPES                   │
     └──────────┬──────────────────────┘
                │              ⌐S508
     ┌──────────┴──────────────────────┐
     │ EXECUTE MULTIPLE SEQUENCE        │
     │          ALIGNMENT               │
     └──────────┬──────────────────────┘
                │              ⌐S509
     ┌──────────┴──────────────────────┐
     │ ACQUIRE POSITION ID (WINDOW) AND │
     │ WINDOW ID OF OPERATION AFTER     │
     │ ALIGNMENT AND REFLECT THEM IN    │
     │ OPERATION SEQUENCE FOR EACH CASE │
     └──────────┬──────────────────────┘
                │
           ┌────┴─────┐
           │   END    │
           └──────────┘
```

Fig. 36

START

S601
SET THRESHOLD'?

Yes

S606
EXTRACT ONLY POSITION ID
(WINDOW), WINDOW ID, POSITION
ID (OPERATION), AND OPERATION
ID THAT APPEAR WITH
THRESHOLD' OR MORE

No

S602
VISUALIZE WINDOWS OF
MAIN FLOW ON ONE AXIS

S603
VISUALIZE WINDOWS
OTHER THAN MAIN FLOW

S604
VISUALIZE OPERATIONS OF MAIN
FLOW ON ONE AXIS IN WINDOW

S605
VISUALIZE OPERATIONS
OTHER THAN MAIN
FLOW IN WINDOW

END

Fig. 37

Fig. 38

Fig. 39

| CASE ID | OPERATION SEQUENCE |
|---------|---------------------|
| A001 | 0,1,2,24,5,6,7,8,9,12,20,31,32,19,25,26,21,22,23 |
| A002 | 0,60,1,2,24,4,5,6,55,56,7,8,9,22,23 |
| A003 | 0,1,2,24,4,5,6,7,9,12,27,71,71,29,21,22,23,40,23,23 |
| A004 | 0,1,2,24,5,6,7,8,9,12,46,96,19,97,98,19,29,21,22,23 |
| A005 | 0,60,1,2,24,3,5,6,7,8,9,12,25,71,26,29,21,22,23,40,23 |

39

| | INTERNATIONAL SEARCH REPORT | International application No. |
|---|---|---|
| | | PCT/JP2021/023827 |

**A. CLASSIFICATION OF SUBJECT MATTER**
G06F 11/32(2006.01)i
FI: G06F11/32
According to International Patent Classification (IPC) or to both national classification and IPC

**B. FIELDS SEARCHED**

Minimum documentation searched (classification system followed by classification symbols)
G06F11/32

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2020-52451 A (HITACHI LTD) 02 April 2020 (2020-04-02) paragraphs [0041]-[0052], [0060]-[0068], [0089]-[0101], [0112]-[0114], fig. 10, 11 | 1, 6, 7<br>2-5 |
| Y<br>A | JP 2017-227944 A (HITACHI LTD) 28 December 2017 (2017-12-28) paragraphs [0008], [0049] | 1, 6, 7<br>2-5 |
| A | JP 2007-328712 A (HITACHI LTD) 20 December 2007 (2007-12-20) entire text | 1-7 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 August 2021 (18.08.2021) | 31 August 2021 (31.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

International application no.

PCT/JP2021/023827

| Patent Documents referred in the Report | Publication Date | Patent Family | Publication Date |
|---|---|---|---|
| JP 2020-52451 A | 02 Apr. 2020 | (Family: none) | |
| JP 2017-227944 A | 28 Dec. 2017 | (Family: none) | |
| JP 2007-328712 A | 20 Dec. 2007 | US 2007/0288443 A1 entire text | |

Form PCT/ISA/210 (patent family annex) (January 2015)

**EP 4 343 555 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **URABE ; YAGI ; TSUCHIKAWA ; MASUDA.** Study of business process visualization method using operation log as input. *IEICE Technical Report,* 2019, vol. 118 (483), 83-88